(19) Europäisches Patentamt
European Patent Office
Office européen des brevets

(11) **EP 4 696 665 A1**

(12) **EUROPÄISCHE PATENTANMELDUNG**

(43) Veröffentlichungstag:
**18.02.2026 Patentblatt 2026/08**

(21) Anmeldenummer: **24194439.6**

(22) Anmeldetag: **14.08.2024**

(51) Internationale Patentklassifikation (IPC):
**C03B 37/012** (2006.01)  **C03B 37/027** (2006.01)

(52) Gemeinsame Patentklassifikation (CPC):
**C03B 37/02781; C03B 37/0122;** C03B 2203/14;
C03B 2203/16; C03B 2203/42

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Heraeus Quarzglas GmbH & Co. KG
63450 Hanau (DE)**

(72) Erfinder:
• **Rosenberger, Manuel
63801 Kleinostheim (DE)**
• **Schuster, Kay
06803 Bitterfeld-Wolfen (DE)**

(74) Vertreter: **Heraeus IP
Heraeus Business Solutions GmbH
Intellectual Property
Heraeusstraße 12-14
63450 Hanau (DE)**

(54) **VERFAHREN ZUR HERSTELLUNG EINER ANTIRESONANTEN HOHLKERNFASER**

(57) Die Erfindung betrifft ein Verfahren zur Herstellung einer antiresonanten Hohlkernfaser (1000) mit einen Außendurchmesser von weniger als 500 μm, mit den Schritten:
• Bereitstellen (3000) eines Hüllrohrs (200), das eine Hüllrohr-Innenbohrung (220) und eine Hüllrohr-Längsachse (230) aufweist, entlang der sich eine von einer Hüllrohr-Innenseite (215) und einer Hüllrohr-Außenseite (216) begrenzte Hüllrohr-Wandung (210) erstreckt,
• Vorbereiten (3100) einer Anzahl von Antiresonanzeinheiten (300), jeweils umfassend ein ARE-Außenrohr (310),
• Einführen (3200) von wenigstens Teilen der Antiresonanzeinheiten (300) in die Hüllrohr-Innenbohrung,
• Erstellen (3300) einer Hohlkern-Anordnung (400), umfassend das Hüllrohr (200) und die Antiresonanzeinheiten (300), durch ein zumindest abschnittsweises Verbinden der Antiresonanzeinheiten (300) mit der Hüllrohr-Innenseite (215),
• Vorbereiten (3400) eines Mantelrohrs (500), das eine Mantelrohr-Innenbohrung (520) und eine Mantelrohr-Längsachse (530) aufweist, entlang der sich eine von einer Mantelinnenseite (515) und einer Mantelaußenseite (516) begrenzte Mantelrohr-Wandung (510) erstreckt,
• Einbringen (3500) von wenigstens Teilen der Hohlkern-Anordnung in die Mantelrohr-Innenbohrung,
• Ziehen (3600) der Hohlkernfaser aus dem Mantelrohr (500) und der Hohlkern-Anordnung (400) durch einen Heißformprozess,
Erfindungsgemäß ist vorgesehen, dass im Schritt Ziehen (3600) der Hohlkernfaser (1000)
• das Hüllrohr (200) einen Hüllrohr-Durchmesser (212) von mindestens 8 mm aufweist,

• das Mantelrohr (500) einen Mantelrohr-Durchmesser (512) von mindestens 25 mm aufweist, und
• ein Verhältnis einer Mantelrohr-Querschnittsfläche (550) der Mantelrohr-Wandung (510) zu einer Hüllrohr-Querschnittsfläche (450) der Hüllrohr-Wandung (210) innerhalb des Intervalls [5; 40] liegt.

Figur 9

**Beschreibung**

Hintergrund der Erfindung

Die Erfindung betrifft ein Verfahren zur Herstellung einer antiresonanten Hohlkernfaser.

Stand der Technik

Hohlkernfasern weisen einen Kern auf, der einen evakuierten, mit Gas oder Flüssigkeit gefüllten Hohlraum umfasst. In Hohlkernfasern ist die Wechselwirkung des Lichts mit dem Glas geringer als in Vollkernfasern. Der Brechungsindex des Kerns ist kleiner als der des umgebenden Mantels, so dass eine Lichtleitung durch Totalreflexion nicht möglich ist. In Abhängigkeit vom physikalischen Mechanismus der Lichtleitung werden Hohlkernfasern unterteilt in "photonische Bandlückenfasern" und "Antiresonanz-Reflexionsfasern".

Bei der als "antiresonante Hohlkernfaser" (auch "antiresonant hollow-core fiber" oder "ARHCF") bezeichneten Ausführungsvariante der Hohlkernfaser ist der hohle Kernbereich von einem inneren Mantelbereich umgeben, in dem sogenannte Antiresonanzeinheiten (auch "antiresonante Elemente" oder "AREs") angeordnet sind. Die um den Hohlkern gleichmäßig verteilten Wandungen der Antiresonanzeinheiten können als in Antiresonanz betriebene Fabry-Perot-Kavitäten wirken, die das auftreffende Licht reflektieren und dadurch Wellenleitung im Faserkern ermöglichen.

Diese Technologie verspricht eine Hohlkernfaser mit niedriger optischer Dämpfung, einem sehr breiten Transmissionsspektrum (auch im UV- oder IR-Wellenlängenbereich) und einer geringen Latenz bei der Datenübertragung.

Aus der WO 2022/157179 A1 ist eine antiresonante Hohlkernfaser bekannt, bei der der Hohlkern von einem inneren Mantel mit Antiresonanzeinheiten umgeben ist. Diese Antiresonanzeinheiten weisen ein ARE-Außenrohr und ein darin eingesetztes ARE-Innenrohr auf.

Die WO 2018/169487 A1 zeigt ein Verfahren zur Herstellung einer Vorform für Hohlkernfasern, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt.

Die Veröffentlichung "Hollow-Core Fiber Technology: The Rising of Gas Photonics" von Benoit Debord (in Fibers, 2019, 7, 16) zeigt ein Modell, das röhrenförmige antiresonante Hohlkernfaserzüge nachbilden und die Ziehparameter und die Geometrie der Faser vorhersagen kann.

Technische Aufgabenstellung

Für die industrielle Nutzung bedarf es antiresonanter Hohlkernfasern, die eine geringe Dämpfung aufweisen. Weiterhin bedarf es einer antiresonanten Hohlkernfaser, die einfach und in großem Umfang herstellbar ist. Nur so lassen sich die Kosten für die antiresonanten Hohlkernfasern in einen sinnhaften Rahmen bringen. Dabei gilt, dass Verfahren zum Herstellen von antiresonanten Hohlkernfasern, die im Labormaßstab gute Ergebnisse bringen, nicht zwangsläufig auch für den großflächigen Einsatz nutzbar sind.

Ein Ziel der Erfindung ist es, ein Verfahren zur Herstellung antiresonanter Hohlkernfasern bereitzustellen, welches die oben genannten Nachteile überwindet.

Insbesondere ist es ein Ziel der Erfindung, ein Verfahren zur Herstellung antiresonanter Hohlkernfasern bereitzustellen, bei welchem die Antiresonanzeinheiten weniger deformiert werden.

Insbesondere ist es ein Ziel der Erfindung, ein Verfahren zur Herstellung antiresonanter Hohlkernfasern bereitzustellen, bei welchem die Antiresonanzeinheiten im Rahmen eines Ziehschrittes einer möglichst geringen Temperatur ausgesetzt werden.

Bevorzugte Ausführungsvarianten der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsvarianten bereit, die zur mindestens teilweisen Erfüllung mindestens einer der Aufgaben beitragen.

Folgende Ausführungsvarianten tragen mindestens teilweise zur Erfüllung mindestens einer der zuvor genannten Aufgaben bei:

Eine 1. Ausführungsvariante des Verfahrens zur Herstellung einer antiresonanten Hohlkernfaser mit einen Außendurchmesser von weniger als 500 µm umfasst die Schritte:

- Bereitstellen eines Hüllrohrs, das eine Hüllrohr-Innenbohrung und eine Hüllrohr-Längsachse aufweist, entlang der sich eine von einer Hüllrohr-Innenseite und einer Hüllrohr-Außenseite begrenzte Hüllrohr-Wandung erstreckt,

- Vorbereiten einer Anzahl von Antiresonanzeinheiten, jeweils umfassend ein ARE-Außenrohr,
- Einführen von wenigstens Teilen der Antiresonanzeinheiten in die Hüllrohr-Innenbohrung,
- Erstellen einer Hohlkern-Anordnung, umfassend das Hüllrohr und die Antiresonanzeinheiten, durch ein zumindest abschnittsweises Verbinden der Antiresonanzeinheiten mit der Hüllrohr-Innenseite,
- Vorbereiten eines Mantelrohrs, das eine Mantelrohr-Innenbohrung und eine Mantelrohr-Längsachse aufweist, entlang der sich eine von einer Mantelinnenseite und einer Mantelaußenseite begrenzte Mantelrohr-Wandung erstreckt,
- Einbringen von wenigstens Teilen der Hohlkern-Anordnung in die Mantelrohr-Innenbohrung,
- Ziehen der Hohlkernfaser aus dem Mantelrohr und der Hohlkern-Anordnung durch einen Heißformprozess.

Dabei ist vorgesehen, dass im Schritt Ziehen der Hohlkernfaser

- das Hüllrohr einen Hüllrohr-Durchmesser von mindestens 8 mm aufweist,
- das Mantelrohr einen Mantelrohr-Durchmesser von mindestens 25 mm aufweist, und
- ein Verhältnis einer Mantelrohr-Querschnittsfläche der Mantelrohr-Wandung zu einer Hüllrohr-Querschnittsfläche der Hüllrohr-Wandung innerhalb des Intervalls [5; 40] liegt.

Eine weitere Ausführungsvariante des Verfahrens ist dadurch gekennzeichnet, dass das Verhältnis der Mantelrohr-Querschnittsfläche zu der Hüllrohr-Querschnittsfläche wenigstens eines der folgenden Merkmale aufweist:

- kleiner oder gleich 37; insbesondere kleiner oder gleich 35 insbesondere kleiner oder gleich 30;
- größer oder gleich 9, insbesondere größer oder gleich 12, insbesondere größer oder gleich 15, insbesondere größer oder gleich 20.

Diese Ausführungsvariante ist die 2. Ausführungsvariante des Verfahrens, die insbesondere von der 1. Ausführungsvariante des Verfahrens abhängt.

Eine weitere Ausführungsvariante des Verfahrens ist dadurch gekennzeichnet, dass die antiresonante Hohlkernfaser einen Außendurchmesser von weniger als 450 $\mu$m, insbesondere weniger als 400 $\mu$m, insbesondere weniger als 300 $\mu$m, insbesondere weniger als 270 $\mu$m, insbesondere weniger als 250 $\mu$m aufweist.

Diese Ausführungsvariante ist die 3. Ausführungsvariante des Verfahrens, die insbesondere von der 1. oder 2. Ausführungsvariante des Verfahrens abhängt.

Eine weitere Ausführungsvariante des Verfahrens ist dadurch gekennzeichnet, dass ein Kernradius R_Faser wenigstens eines der folgenden Merkmale aufweist:

- kleiner oder gleich 26 $\mu$m, insbesondere kleiner oder gleich 23 $\mu$m, insbesondere kleiner oder gleich 20 $\mu$m; und
- größer oder gleich 10 $\mu$m, insbesondere größer oder gleich 12 $\mu$m, insbesondere größer oder gleich 14 $\mu$m.

Diese Ausführungsvariante ist die 4. Ausführungsvariante des Verfahrens, die insbesondere von wenigstens einer der 1. bis 3. Ausführungsvarianten des Verfahrens abhängt.

Eine weitere Ausführungsvariante des Verfahrens ist dadurch gekennzeichnet, dass das Hüllrohr wenigstens eines der folgenden Merkmale aufweist:

- der Hüllrohr-Durchmesser kleiner gleich 100 mm, kleiner gleich 90 mm, kleiner gleich 75 mm, kleiner gleich 50 mm ist;
- der Hüllrohr-Durchmesser größer gleich 10 mm, größer gleich 15 mm, größer gleich 20 mm ist;
- die Hüllrohr-Wandung eine Wandstärke von mehr als 2 mm, mehr als 3 mm, mehr als 5 mm, mehr als 7,5 mm aufweist;
- die Hüllrohr-Wandung eine Wandstärke von weniger als 25 mm, weniger als 20 mm, weniger als 15 mm aufweist;
- das Hüllrohr eine Hüllrohrlänge von mindestens 1 m aufweist;
- dass ein Betrag der Wandstärke der Hüllrohr-Wandung über die Hüllrohrlänge um weniger als 10 %, insbesondere 5 %, insbesondere 3 % der Wandstärke variiert.

Diese Ausführungsvariante ist die 5. Ausführungsvariante des Verfahrens, die insbesondere von wenigstens einer der 1. bis 4. Ausführungsvarianten des Verfahrens abhängt.

Eine weitere Ausführungsvariante des Verfahrens ist dadurch gekennzeichnet, dass das ARE-Außenrohr ein darin eingesetztes ARE-Innenrohr aufweist.

Diese Ausführungsvariante ist die 6. Ausführungsvariante des Verfahrens, die insbesondere von wenigstens einer der 1. bis 5. Ausführungsvarianten des Verfahrens abhängt.

Eine weitere Ausführungsvariante des Verfahrens ist dadurch gekennzeichnet, dass die Hohlkern-Anordnung drei, vier, fünf, sechs, sieben oder acht Antiresonanzeinheiten aufweist. Diese Ausführungsvariante ist die 7. Ausführungsvariante des Verfahrens, die insbesondere von wenigstens einer der 1. bis 6. Ausführungsvarianten des Verfahrens abhängt.

Eine weitere Ausführungsvariante des Verfahrens ist dadurch gekennzeichnet, dass das zumindest abschnittsweise Verbinden der Antiresonanzeinheiten mit der Hüllrohr-Innenseite wenigstens eines der folgenden Merkmale umfasst:

- ein Verbinden im Rahmen eines zweiten Heißformprozesses, insbesondere ausgewählt aus wenigstens einem von Elongieren und Kollabieren;
- ein stoffschlüssiges Verbinden der Antiresonanzeinheiten mit der Hüllrohr-Innenseite entlang einer Verbindungsnaht;
- ein punktuelles und stoffschlüssiges Verbinden der Antiresonanzeinheiten mit Teilen der Hüllrohr-Innenseite.

Diese Ausführungsvariante ist die 8. Ausführungsvariante des Verfahrens, die insbesondere von wenigstens einer der 1. bis 7. Ausführungsvarianten des Verfahrens abhängt.

Eine weitere Ausführungsvariante des Verfahrens ist dadurch gekennzeichnet, dass das Mantelrohr wenigstens eines der folgenden Merkmale aufweist:

- der Mantelrohr-Durchmesser kleiner gleich 290 mm, insbesondere kleiner gleich 220 mm, insbesondere kleiner gleich 180 mm, insbesondere kleiner gleich 150 mm ist;
- der Mantelrohr-Durchmesser größer gleich 50 mm, insbesondere größer gleich 60 mm, insbesondere größer gleich 75 mm, insbesondere größer gleich 85 mm ist;
- die Mantelrohr-Wandung eine Wandstärke von mehr als 20 mm, insbesondere mehr als 30 mm, insbesondere mehr als 40 mm, insbesondere mehr als 50 mm aufweist;
- die Mantelrohr-Wandung eine Wandstärke von weniger als 90 mm, insbesondere weniger als 80 mm, insbesondere weniger als 70 mm, insbesondere weniger als 60 mm aufweist;
- das Mantelrohr eine Mantelrohrlänge von mindestens 1 m aufweist;
- dass ein Betrag der Wandstärke der Mantelrohr-Wandung über die Mantelrohrlänge um nicht mehr als 10 %, insbesondere 5 %, insbesondere 3 % der Wandstärke variiert.

Diese Ausführungsvariante ist die 9. Ausführungsvariante des Verfahrens, die insbesondere von wenigstens einer der 1. bis 8. Ausführungsvarianten des Verfahrens abhängt.

Eine weitere Ausführungsvariante des Verfahrens ist dadurch gekennzeichnet, dass die Hüllrohrlänge und die Mantelrohrlänge, insbesondere die Hüllrohrlänge, die Mantelrohrlänge und eine Länge der Antiresonanzeinheiten sich um nicht mehr als um 15 %, insbesondere 10 %, insbesondere 5 %, bezogen auf die Mantelrohrlänge unterscheiden.

Diese Ausführungsvariante ist die 10. Ausführungsvariante des Verfahrens, die insbesondere von wenigstens einer der 1. bis 9. Ausführungsvarianten des Verfahrens abhängt.

Eine weitere Ausführungsvariante des Verfahrens ist dadurch gekennzeichnet, dass das Verfahren wenigstens eines der folgenden Merkmale aufweist:

- ein Betrag der Hüllrohr-Querschnittsfläche der Hüllrohr-Wandung über die Hüllrohrlänge nicht mehr als um 10 %, insbesondere 5 %, insbesondere 3 % variiert;
- ein Betrag der Mantelrohr-Querschnittsfläche der Mantelrohr-Wandung über die Mantelrohrlänge nicht mehr als um 10 %, insbesondere 5 %, insbesondere 3 % variiert;
- ein Betrag des Verhältnisses der Mantelrohr-Querschnittsfläche zu der Hüllrohr-Querschnittsfläche über die Mantelrohrlänge nicht mehr als um 10 %, insbesondere 5 %, insbesondere 3 %, bezogen auf die Mantelrohr-Querschnittsfläche variiert.

Diese Ausführungsvariante ist die 11. Ausführungsvariante des Verfahrens, die insbesondere von wenigstens einer der 1. bis 10. Ausführungsvarianten des Verfahrens abhängt.

Eine weitere Ausführungsvariante des Verfahrens ist dadurch gekennzeichnet, dass das Verfahren zwischen dem Schritt des Einbringens und dem Schritt des Ziehens heißformprozessschrittfrei ist.

Diese Ausführungsvariante ist die 12. Ausführungsvariante des Verfahrens, die insbesondere von wenigstens einer der 1. bis 11. Ausführungsvarianten des Verfahrens abhängt.

Eine weitere Ausführungsvariante des Verfahrens ist dadurch gekennzeichnet, dass das Verfahren zwischen dem Schritt des Einbringens und dem Schritt des Ziehens zwischenschrittfrei ist.

Diese Ausführungsvariante ist die 13. Ausführungsvariante des Verfahrens, die insbesondere von wenigstens einer der 1. bis 12. Ausführungsvarianten des Verfahrens abhängt.

Eine weitere Ausführungsvariante des Verfahrens ist dadurch gekennzeichnet, dass der Schritt des Ziehens durch einen Heißformprozess, ausgewählt aus wenigstens einem von Elongieren und Kollabieren, erfolgt.

Diese Ausführungsvariante ist die 14. Ausführungsvariante des Verfahrens, die insbesondere von wenigstens einer der 1. bis 13. Ausführungsvarianten des Verfahrens abhängt.

Eine weitere Ausführungsvariante des Verfahrens ist dadurch gekennzeichnet, dass eine im Rahmen des Heißformprozesses im Schritt Ziehen in das Mantelrohr eingebrachte Wärme bei einem Übergang zwischen Mantelrohr und Hüllrohr wenigstens zwei Wärmeübergängen unterliegt, insbesondere, dass nach dem Schritt Einbringen ein Spalt zwischen dem Mantelrohr und der Hohlkern-Anordnung besteht, so dass eine insbesondere im Rahmen des Heißformprozesses im Schritt Ziehen in das Mantelrohr eingebrachte Wärme in dem Spalt wenigstens zwei Wärmeübergängen unterliegt.

Diese Ausführungsvariante ist die 15. Ausführungsvariante des Verfahrens, die insbesondere von wenigstens einer der 1. bis 14. Ausführungsvarianten des Verfahrens abhängt.

Eine weitere Ausführungsvariante des Verfahrens ist dadurch gekennzeichnet, dass bei einer zentrierten Positionierung der Hohlkern-Anordnung in der Mantelrohr-Innenbohrung der Spalt wenigstens eines der folgenden Merkmale aufweist:

- eine radiale Größe des Spalts kleiner gleich 4 mm, insbesondere kleiner gleich 3 mm, insbesondere kleiner gleich 2 mm, insbesondere kleiner gleich 1 mm ist;
- die radiale Größe des Spalts größer gleich 0,3 mm, insbesondere größer gleich 0,5 mm, insbesondere größer gleich 0,75 mm, insbesondere größer gleich 0,85 mm ist.

Diese Ausführungsvariante ist die 16. Ausführungsvariante des Verfahrens, die insbesondere von der 15. Ausführungsvariante des Verfahrens abhängt.

Eine weitere Ausführungsvariante des Verfahrens ist dadurch gekennzeichnet, dass ein erster Wärmeübergangskoeffizient an einer äußeren Grenzfläche zwischen dem Spalt und der Mantelinnenseite innerhalb des Intervalls $[65; 180]$ W/(m$^2$*K), insbesondere innerhalb des Intervalls $[90; 150]$ W/(m$^2$*K) für 500-900°C liegt.

Diese Ausführungsvariante ist die 17. Ausführungsvariante des Verfahrens, die insbesondere von wenigstens einer der 15. oder 16. Ausführungsvarianten des Verfahrens abhängt.

Eine weitere Ausführungsvariante des Verfahrens ist dadurch gekennzeichnet, dass ein zweiter Wärmeübergangskoeffizient an einer inneren Grenzfläche zwischen dem Spalt und der Hüllrohr-Außenseite innerhalb des Intervalls $[65; 180]$ W/(m$^2$*K), insbesondere innerhalb des Intervalls $[90; 150]$ W/(m$^2$*K) für 500-900°C liegt.

Diese Ausführungsvariante ist die 18. Ausführungsvariante des Verfahrens, die insbesondere von wenigstens einer der 15. bis 17. Ausführungsvarianten des Verfahrens abhängt.

Eine weitere Ausführungsvariante des Verfahrens ist dadurch gekennzeichnet, dass das Verfahren wenigstens eines der folgenden Schritte umfasst:

- Beschichten der Hohlkernfaser mit wenigstens einer Schicht, insbesondere einer Schicht, die lichthärtendes Polymer aufweist;
- Aufwickeln der Hohlkernfaser auf eine Spule.

Diese Ausführungsvariante ist die 19. Ausführungsvariante des Verfahrens, die insbesondere von wenigstens einer der 1. bis 18. Ausführungsvarianten des Verfahrens abhängt.

Eine weitere Ausführungsvariante des Verfahrens ist dadurch gekennzeichnet, dass die Hohlkernfaser wenigstens eines der folgenden Merkmale aufweist:

- Hüllrohr und/oder Antiresonanzeinheiten und/oder ARE-Außenrohr und/oder ARE-Innenrohr und/oder Mantelrohr einen amorphen Festkörper, insbesondere ein Glas, insbesondere Quarzglas, umfasst;
- Hüllrohr und/oder Antiresonanzeinheiten und/oder ARE-Außenrohr und/oder ARE-Innenrohr und/oder Mantelrohr aus einem amorphen Festkörper, insbesondere einem Glas, insbesondere Quarzglas, besteht;
- dass wenigstens zwei von Hüllrohr, Antiresonanzeinheiten, ARE-Außenrohr, ARE-Innenrohr und Mantelrohr materialeinheitlich sind, insbesondere ein Glas mit einem Brechungsindex von mindestens 1,4, insbesondere 1,4 bis 3, insbesondere 1,4 bis 2,8 umfassen oder daraus bestehen.

Diese Ausführungsvariante ist die 20. Ausführungsvariante des Verfahrens, die insbesondere von wenigstens einer der 1. bis 19. Ausführungsvarianten des Verfahrens abhängt.

Ausführliche Beschreibung

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann.

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "senkrecht", "Durchmesser" oder "Parallelität" nie exakt, sondern nur innerhalb gewisser fertigungstechnischer Fehlertoleranzen gegeben sein kann.

Die Erfindung betrifft ein Verfahren zur Herstellung einer antiresonanten Hohlkernfaser mit einen Außendurchmesser von weniger als 500 μm, umfassend die Schritte:

- Bereitstellen eines Hüllrohrs, das eine Hüllrohr-Innenbohrung und eine Hüllrohr-Längsachse aufweist, entlang der sich eine von einer Hüllrohr-Innenseite und einer Hüllrohr-Außenseite begrenzte Hüllrohr-Wandung erstreckt,
- Vorbereiten einer Anzahl von Antiresonanzeinheiten, jeweils umfassend ein ARE-Außenrohr,
- Einführen von wenigstens Teilen der Antiresonanzeinheiten in die Hüllrohr-Innenbohrung,
- Erstellen einer Hohlkern-Anordnung, umfassend das Hüllrohr und die Antiresonanzeinheiten, durch ein zumindest abschnittsweises Verbinden der Antiresonanzeinheiten mit der Hüllrohr-Innenseite,
- Vorbereiten eines Mantelrohrs, das eine Mantelrohr-Innenbohrung und eine Mantelrohr-Längsachse aufweist, entlang der sich eine von einer Mantelinnenseite und einer Mantelaußenseite begrenzte Mantelrohr-Wandung erstreckt,
- Einbringen von wenigstens Teilen der Hohlkern-Anordnung in die Mantelrohr-Innenbohrung,
- Ziehen der Hohlkernfaser aus dem Mantelrohr und der Hohlkern-Anordnung durch einen Heißformprozess.

Erfindungsgemäß ist vorgesehen, dass im Schritt Ziehen der Hohlkernfaser

- das Hüllrohr einen Hüllrohr-Durchmesser von mindestens 8 mm aufweist,
- das Mantelrohr einen Mantelrohr-Durchmesser von mindestens 25 mm aufweist, und
- ein Verhältnis einer Mantelrohr-Querschnittsfläche der Mantelrohr-Wandung zu einer Hüllrohr-Querschnittsfläche der Hüllrohr-Wandung innerhalb des Intervalls [5; 40] liegt.

Endprodukt des erfindungsgemäßen Verfahrens ist eine antiresonante Hohlkernfaser mit einem Außendurchmesser von weniger als 500 μm. Solcherart Hohlkernfasern werden insbesondere als optische Fasern in der Telekommunikation, insbesondere in Datencentern genutzt.

Die durch das beschriebene Verfahren erreichte Reduktion der Temperatur an der Hüllrohr-Innenseite resultiert insbesondere in einer Erhöhung der Viskosität der Antiresonanzeinheit, insbesondere der ARE-Innenrohre. Die höhere Stabilität der Antiresonanzeinheit im Schritt Ziehen sorgt für geringere Schwankungen der geometrischen Form der Antiresonanzeinheiten in der Hohlkernfaser. Diese Schwanken führen ansonsten zu Abweichungen der Geometrie der gezogenen Hohlkernfaser vom angestrebten Faserprofil. Schon kleine Abweichungen vom gewünschten Faserprofil führen allerdings häufig zu einer nichtlinearen Steigung der Dämpfung. Somit haben auch kleinste Abweichungen vom gewünschten Faserprofil starke Auswirkungen. Deshalb reduziert die offenbarte Art des Verfahrens insbesondere die Variationen in der Dämpfung der gezogenen antiresonanten Hohlkernfaser signifikant.

Im Rahmen des Schrittes Bereitstellen wird das Hüllrohr vorbereitet. Das Hüllrohr ist ein länglicher Hohlkörper, dessen Länge wesentlich größer als sein Durchmesser ist. Das Hüllrohr weist eine Hüllrohr-Innenbohrung und eine Hüllrohr-Längsachse auf, entlang der sich eine von einer Hüllrohr-Innenseite und einer Hüllrohr-Außenseite begrenzte Hüllrohr-Wandung erstreckt. Aufgrund der rohrartigen Struktur weist das Hüllrohr einen hohlen Kern auf, der sich entlang der Hüllrohr-Längsachse erstreckt. Insbesondere kann das Hüllrohr eine Länge von mindestens 1 m, insbesondere 2 m aufweisen. In einer Ausführungsvariante umfasst oder besteht das Hüllrohr aus einem Material, welches für ein Arbeitslicht der optischen Faser transparent ist, beispielsweise Glas, insbesondere dotiertes oder nicht dotiertes Quarzglas (SiO2). Eine Dotierung ermöglicht die Anpassung von physikalischen Eigenschaften, wie beispielsweise des thermischen Ausdehnungskoeffizienten. Als die Viskosität von Quarzglas absenkende Dotierstoffe kommen vorzugsweise Fluor, Chlor und/oder Hydroxylgruppen zum Einsatz.

Im Rahmen des Schrittes Vorbereiten werden eine Anzahl an Antiresonanzeinheiten erstellt. Die einzelne Antiresonanzeinheit ist als rohrartiges Strukturelement aufgebaut, umfassend ein ARE-Außenrohr. In einer Ausführungsvariante umfassen die Antiresonanzeinheiten ein ARE-Außenrohr und ein darin eingesetztes ARE-Innenrohr. In dieser Ausführungsvariante können die Antiresonanzeinheiten mindestens zwei Wandungen aufweisen, die aus Richtung des Hohlkerns gesehen eine negative Krümmung haben (konvex) oder keine Krümmung haben (plan, gerade).

In einer Ausführungsvariante umfasst oder besteht die Antiresonanzeinheit aus einem Material, welches für ein Arbeitslicht der optischen Faser transparent ist, beispielsweise Glas, insbesondere dotiertes oder nicht dotiertes Quarzglas (SiO2). Eine Dotierung ermöglicht die Anpassung von physikalischen Eigenschaften, wie beispielsweise des thermischen Ausdehnungskoeffizienten. Als die Viskosität von Quarzglas absenkende Dotierstoffe kommen vorzugsweise Fluor, Chlor und/oder Hydroxylgruppen zum Einsatz. In einer Ausführungsvariante sind die Antiresonanzeinheiten und das Hüllrohr materialeinheitlich.

Der Begriff materialeinheitlich beschreibt die stoffliche Eigenschaft zweier Teile. Die zwei Teile weisen dabei im Wesentlichen denselben chemischen Stoff auf. Die Gesamtmasse der unterschiedlichen chemischen Elemente in beiden Teilen kann dabei weniger als 1 Gew.-%, insbesondere weniger als 0,5 Gew-%, insbesondere weniger als 0,1 Gew.-% betragen. Insbesondere unterscheidet sich die chemische Zusammensetzung der beiden Teile um einen Gehalt an Verunreinigungen von weniger als 500 Gew.-ppm, insbesondere weniger als 100 Gew.-ppm und/oder um einen Gehalt an Dotanden von weniger als 10000 Gew.-ppm, insbesondere weniger als 5000 Gew.-ppm.

Im Rahmen des Schrittes Einführen erfolgt ein zumindest partielles Einschieben der Antiresonanzeinheiten in die Hüllrohr-Innenbohrung. Ziel ist dabei, dass die Antiresonanzeinheiten in der Hüllrohr-Innenbohrung angeordnet werden.

Im Rahmen des Schrittes Erstellen erfolgt ein Anfertigen einer Hohlkern-Anordnung. Solcherart Hohlkern-Anordnung wird auch als Cane bezeichnet und umfasst das Hüllrohr und die Antiresonanzeinheiten. Dabei werden die Antiresonanzeinheiten zumindest abschnittsweise mit der Hüllrohr-Innenseite verbunden.

Vor dem Verbinden werden die rohrartigen Antiresonanzeinheiten in den hohlen Kern des ebenfalls rohrartigen Hüllrohrs eingeschoben. Anschließend kann eine Positionierung der Antiresonanzeinheiten an vorbestimmten Soll-Positionen in dem Hüllrohr erfolgen. Das zumindest abschnittsweise Verbinden der Antiresonanzeinheiten mit der Hüllrohr-Innenseite kann wenigstens einen der folgenden Schritte umfassen:

- ein Verbinden im Rahmen eines zweiten Heißformprozesses, insbesondere ausgewählt aus wenigstens einem von Elongieren und Kollabieren;
- ein stoffschlüssiges Verbinden der Antiresonanzeinheiten mit der Hüllrohr-Innenseite entlang einer Verbindungsnaht;
- ein punktuelles und stoffschlüssiges Verbinden der Antiresonanzeinheiten mit Teilen der Hüllrohr-Innenseite.

Der Begriff materialeinheitlich beschreibt die Verbindung wenigstens zweier Verbindungspartner, bei denen die Verbindungspartner durch atomare oder molekulare Kräfte zusammengehalten werden.

Das Verbinden der Antiresonanzeinheiten an der Hüllrohr-Innenseite kann punktuell erfolgen. So kann in einer Ausführungsvariante die jeweilige Antiresonanzeinheit nur an mindestens zwei Punkten stoffschlüssig mit der Hüllrohr-Innenseite verbunden werden.

In einer anderen Ausführungsvariante kann die jeweilige Antiresonanzeinheit entlang einer Verbindungsnaht stoffschlüssig mit der Hüllrohr-Innenseite verbunden werden. Die Verbindungsnaht kann dabei insbesondere im Wesentlichen über die Länge der Hüllrohr-Innenseite verlaufen.

Nach dem Verbinden kann eine Längsachse der jeweiligen Antiresonanzeinheiten im Wesentlichen parallel zur Hüllrohr-Längsachse ausgerichtet sein. In einer Ausführungsvariante können die Längsachse der Antiresonanzeinheiten und die Hüllrohr-Längsachse einen Winkel von -1,5 Grad bis 1,5 Grad, vorzugsweise von -0,85 Grad bis 0,85 Grad, vorzugsweise von - 0,42 Grad bis 0,42 Grad zueinander aufweisen. Diese Parallelität verbessert die Resonanzbeziehungsweise Antiresonanzbedingungen in der späteren Hohlkernfaser.

Das Verbinden der Antiresonanzeinheiten mit der Hüllrohr-Innenseite kann insbesondere im Rahmen eines zweiten Heißformprozesses erfolgen.

Im Rahmen des Schrittes Vorbereiten wird das Mantelrohr bereitgestellt. Das Mantelrohr ist ein länglicher Hohlkörper, dessen Länge wesentlich größer als sein Durchmesser ist. Das Mantelrohr weist eine Mantelrohr-Innenbohrung und eine Mantelrohr-Längsachse aufweist, entlang der sich eine von einer Mantelinnenseite und einer Mantelaußenseite begrenzte Mantelrohr-Wandung erstreckt. Aufgrund der rohrartigen Struktur weist das Mantelrohr einen hohlen Kern auf, der sich entlang der Mantelrohr-Längsachse erstreckt. Insbesondere kann das Mantelrohr eine Länge von mindestens 1 m, insbesondere 2 m aufweisen. In einer Ausführungsvariante umfasst oder besteht das Mantelrohr aus einem Material, welches für ein Arbeitslicht der optischen Faser transparent ist, beispielsweise Glas, insbesondere dotiertes oder nicht dotiertes Quarzglas ($SiO_2$). Eine Dotierung ermöglich die Anpassung von physikalischen Eigenschaften, wie beispielsweise des thermischen Ausdehnungskoeffizienten. Als die Viskosität von Quarzglas absenkende Dotierstoffe kommen vorzugsweise Fluor, Chlor und/oder Hydroxylgruppen zum Einsatz. In einer Ausführungsvariante sind die Antiresonanzeinheiten, das Mantelrohr und das Hüllrohr materialeinheitlich.

Im Rahmen des Schrittes Einbringens erfolgt ein zumindest partielles Einschieben der Hohlkern-Anordnung in die Mantelrohr-Innenbohrung. Ziel ist dabei, dass die Hohlkern-Anordnung in der Mantelrohr-Innenbohrung angeordnet ist. Eine Ausführungsvariante zeichnet sich dadurch aus, dass die Hohlkern-Anordnung drei, vier, fünf, sechs, sieben oder acht Antiresonanzeinheiten aufweist.

Im Rahmen des Schrittes Ziehen erfolgt eine Reduktion der transversalen Ausdehnung des Mantelrohrs und der Hohlkern-Anordnung, um so zu der Hohlkernfaser zu gelangen. Im Rahmen des Schrittes Ziehen kann es zu einer Vergrößerung der longitudinalen Ausdehnung und/oder einer Reduktion der transversalen Ausdehnung der Faseranordnung aus Mantelrohr und Hohlkern-Anordnung kommen. Das Ziehen kann maßstäblich erfolgen, so dass sich beispielsweise die geometrische Form und Anordnung von Bauteilen oder Bestandteilen im gezogenen Endprodukt widerspiegeln.

Der Schritt des Ziehens erfolgt im Rahmen eines Heißformprozesses. Unter dem Begriff Heißformprozess wird ein Verfahrensschritt verstanden, bei dem die Temperatur eines Elements durch Wärmeeintrag erhöht wird. Beispiele für Heißformprozesse sind:

- Flammenbasierte Heißformprozesse basieren auf der Oxidation eines exotherm reagierenden Gases. Ein Beispiel ist die Nutzung von Wasserstoff - auch als "H2" bezeichnet - als Brenngas (die Flammenhydrolyse). Der Wasserstoff reagiert mit Sauerstoff - auch als "O2" bezeichnet - der entweder aus der Luft stammt oder separat zugeführt wird.
- Flammenfreie Heißformprozesse nutzen andere sich erwärmende Systeme, die keine offene Flamme benötigen. Ein Beispiel ist die Nutzung eines Widerstands, der elektrische Energie in thermische Energie (Wärme) umwandelt.

Im Rahmen des Ziehens kann die Faseranordnung, umfassend das Mantelrohr und die Hohlkern-Anordnung, durch wenigstens einen der Heißformprozesse Elongieren und Kollabieren weiterverarbeitet werden.

Unter dem Begriff eines Elongierens wird im Rahmen der Erfindung eine Vergrößerung der longitudinalen Ausdehnung eines Körpers verstanden. Diese Vergrößerung der longitudinalen Ausdehnung kann einhergehen mit einer Reduktion der transversalen Ausdehnung der Faseranordnung. Das Elongieren kann maßstäblich erfolgen, so dass sich beispielsweise die Form und Anordnung von Bauteilen oder Bestandteilen im elongierten Endprodukt widerspiegeln.

Unter dem Begriff eines Kollabierens wird im Rahmen der Erfindung eine Reduktion der transversalen Ausdehnung eines Körpers verstanden. Diese Reduktion der transversalen Ausdehnung der Faseranordnung kann im Rahmen einer Erhöhung der Temperatur des Körpers erfolgen und kann insbesondere zu einer Vergrößerung der longitudinalen Ausdehnung des Körpers führen.

Der Schritt Ziehen umfasst einen Heißformprozess, um so die Faseranordnung, umfassend Mantelrohr und Hohlkern-Anordnung, zu einer Hohlkernfaser mit einem Außendurchmesser von weniger als 500 μm auszuziehen. Um die Vergrößerung der longitudinalen Ausdehnung und/oder die Reduktion der transversalen Ausdehnung der Faseranordnung zu erreichen, kann die Faseranordnung in einem Ziehturm partiell auf eine Temperatur im Bereich von 1.800 bis 2.200 Grad Celsius erhitzt werden. Der Ziehturm kann einen Ofen aufweisen, in dem ein Ende der Faseranordnung derart erhitzt wird, bis ein Stück geschmolzenes Material aus der Faseranordnung fällt und einen dünnen Strang bildet, der den Anfang der Hohlkernfaser darstellt.

Um die Form und Anordnung der Antiresonanzeinheiten in der Hohlkernfaser zu beeinflussen, kann ein Aufblasen von Hohlräumen im Schritt Ziehen genutzt werden. Die finale Größe der Antiresonanzeinheiten in der Hohlkernfaser ist aufgrund der geringen Wanddicken schwierig zu kontrollieren. Falls die Antiresonanzeinheiten in der Hohlkernfaser zu klein und daher die Abstände zwischen den Antiresonanzeinheiten zu groß sind, kann die Hohlkernfaser eine hohe Dämpfung aufweisen. Falls die geometrische Größe der Antiresonanzeinheiten in der Hohlkernfaser zu groß ist, diese insbesondere zu stark aufgeblasen werden, kann es zu Berührungen benachbarter Antiresonanzeinheiten in der Hohlkernfaser kommen, was ebenfalls zu einer erhöhten Dämpfung führt. Insbesondere ist die finale Größe der Antiresonanzeinheiten in der Hohlkernfaser besser zu kontrollieren, wenn die Kapillaren eine geringe Temperatur und damit eine erhöhte Viskosität aufweisen.

Es wurde überraschend festgestellt, dass das im Rahmen des Schritts Ziehen vorliegende Verhältnis der geometrischen Größe des Mantelrohrs und der Hohlkern-Anordnung positive Auswirkungen auf die Temperatur der Antiresonanzeinheiten hat. Um die oben aufgeführten Aufgaben zu erfüllen ist vorgesehen, dass im Schritt Ziehen der Hohlkernfaser

- das Hüllrohr einen Hüllrohr-Durchmesser von mindestens 8 mm aufweist,
- das Mantelrohr einen Mantelrohr-Durchmesser von mindestens 25 mm aufweist, und
- ein Verhältnis einer Mantelrohr-Querschnittsfläche der Mantelrohr-Wandung zu einer Hüllrohr-Querschnittsfläche der Hüllrohr-Wandung innerhalb des Intervalls [5; 40] liegt.

Eine Querschnittsfläche bezeichnet im Rahmen der Erfindung jene Fläche, die senkrecht zu einer bestimmten Richtung oder Achse verläuft und den Querschnitt eines Objekts darstellt. Die Hüllrohr-Querschnittsfläche ist insbesondere definiert als jene Fläche, die sich aus dem Schnittpunkt einer auf der Hüllrohr-Längsachse senkrecht verlaufenden Ebene mit dem Hüllrohr ergibt. Durch produktionsbedingte Schwankungen in dem Hüllrohrdurchmesser des Hüllrohrs und/oder der Wandstärke der Hüllrohr-Wandung kann ein Betrag der Hüllrohr-Querschnittsfläche über die gesamte Länge des Hüllrohrs einer Schwankung von 10 %, insbesondere 5 % unterliegen. Die Mantelrohr-Querschnittsfläche ist insbesondere definiert als jene Fläche, die sich aus dem Schnittpunkt einer auf der Mantelrohr-Längsachse senkrecht verlaufenden Ebene mit dem Mantelrohr ergibt. Durch produktionsbedingte Schwankungen in dem Mantelrohrdurchmesser des Mantelrohrs und/oder der Wandstärke der Mantelrohr-Wandung kann ein Betrag der Mantelrohr-Querschnittsfläche über die gesamte Länge des Mantelrohrs einer Schwankung von 10 %, insbesondere 5 % unterliegen.

Es ist vorgesehen, dass das Verhältnis der Mantelrohr-Querschnittsfläche zu der Hüllrohr-Querschnittsfläche im Rahmen des Schrittes Ziehen vorliegen muss. Das Verhältnis muss also nicht zu einem beliebigen Zeitpunkt im Verlauf des Prozesses gegeben sein, sondern im Rahmen des Schritts Ziehen, also unmittelbar vor der größten Wärmeeinwirkung. Dies kann insbesondere der Fall sein, wenn die Faseranordnung, umfassend Mantelrohr und Hohlkern-Anordnung, in den Ofen im Ziehturm eingebracht wird.

Weiterhin ist vorgesehen, dass das Hüllrohr einen Hüllrohr-Durchmesser von mindestens 8 mm und das Mantelrohr einen Mantelrohr-Durchmesser von mindestens 25 mm aufweist. Somit bedarf es sowohl für das Hüllrohr als auch das Mantelrohr einer minimalen Dicke der Wandung, um den beschriebenen Effekt zu erzielen.

Weiterhin ist vorgesehen, dass das Verhältnis einer Mantelrohr-Querschnittsfläche der Mantelrohr-Wandung zu einer Hüllrohr-Querschnittsfläche der Hüllrohr-Wandung innerhalb des Intervalls [5; 40] liegt.

Überraschend hat sich gezeigt, dass bei einem Verhältnis der Mantelrohr-Querschnittsfläche zu der Hüllrohr-Querschnittsfläche im Intervall [5; 40], zwei im Schritt Ziehen einer antiresonanten Hohlkernfaser mit einem Außendurchmesser von weniger als 500 $\mu$m auftretenden, gegenläufigen Effekte optimal eingestellt sind, wenn:

- einerseits eine Absenkung der Temperatur an der Mantelinnenseite - also auch an den Antiresonanzeinheiten erfolgt, und
- andererseits die Wandstärke der Mantelrohr-Wandung groß genug ist, um den Großteil der beim Ziehen auftretenden Spannung aufzunehmen.

Es scheint, als ob das besagte Verhältnis einen Einfluss auf die Temperatur an der Hüllrohrinnenseite - also auch an den Antiresonanzeinheiten - hat.

Einerseits sollte die Temperatur des Mantelmaterials hoch sein, um eine passende Viskosität für den Schritt Ziehen sicherzustellen. Anderseits sollte die Temperatur an der Hüllrohrinnenseite - also auch an den Antiresonanzeinheiten - derart gering sein, dass ein Ziehen möglichst die Form der Antiresonanzeinheiten nicht negativ beeinflusst.

Ein dünnwandiges Mantelrohr in Verbindung mit einem möglichst dickwandigen Hüllrohr würde die Temperatur an der Hüllrohrinnenseite stärker absenken. Der Schritt Ziehen ist aber mit einer Scherung im Material, insbesondere bei Quarzglas, verbunden, welche zum Einbringen von Spannungen führt. Würde die Hohlkern-Anordnung eine zu große Dimension des Hüllrohres aufweisen - also sehr dickwandig sein -, wären die Differenzen der Fließgeschwindigkeiten - von der Außenseite des Hüllrohrs im Verhältnis zum Bereich der Antiresonanzeinheiten - zu groß, so dass zu viel Spannung innerhalb der Hohlkernfaser eingefroren wird. Dies könnte die Festigkeit der Hohlkernfaser negativ beeinflussen.

Ein dickwandiges Mantelrohr in Verbindung mit einem möglichst dünnwandigen Hüllrohr könnte dazu führen, dass das Mantelrohr im Schritt Ziehen die Ziehtemperatur dominiert und sehr stark erhitzt werden müsste. Zwar würde das Mantelrohr den wesentlichen Teil der Spannungen aufnehmen, die Antiresonanzeinheiten würden aber einer höheren Temperatur ausgesetzt und gegebenenfalls stärker kollabieren, was dem gewünschten Strukturerhalt entgegenläuft.

Eine weitere Ausführungsvariante zeichnet sich dadurch aus, dass das Verhältnis der Mantelrohr-Querschnittsfläche zu der Hüllrohr-Querschnittsfläche wenigstens eines der folgenden Merkmale aufweist:

- kleiner oder gleich 37; insbesondere kleiner oder gleich 35, insbesondere kleiner oder gleich 30;
- größer oder gleich 9, insbesondere größer oder gleich 12, insbesondere größer oder gleich 15, insbesondere größer oder gleich 20.

Diese weiteren Beschränkungen des Verhältnisses der Mantelrohr-Querschnittsfläche zu der Hüllrohr-Querschnittsfläche führen überraschenderweise zu einer Reduktion der Deformation der Antiresonanzeinheiten im Rahmen der Herstellung der Hohlkernfaser.

Eine weitere Ausführungsvariante zeichnet sich dadurch aus, dass die antiresonante Hohlkernfaser einen Außendurchmesser von weniger als 450 $\mu$m, insbesondere weniger als 400 $\mu$m, insbesondere weniger als 300 $\mu$m, insbesondere weniger als 270 $\mu$m, insbesondere weniger als 250 $\mu$m aufweist. Um eine antiresonante Hohlkernfaser mit kleinerem Außendurchmesser herzustellen, bedarf es einer immer stärkeren Erwärmung der Faseranordnung. Die Nutzung des erfindungsgemäßen Verhältnisses der Querschnittsfläche stellt sicher, dass die Deformation der Antiresonanzeinheiten durch den Wärmeeintrag im Rahmen der Herstellung der Hohlkernfaser minimiert wird.

Eine weitere Ausführungsvariante zeichnet sich dadurch aus, dass ein Kernradius R_Faser wenigstens eines der folgenden Merkmale aufweist:

- kleiner oder gleich 26 $\mu$m, insbesondere kleiner oder gleich 23 $\mu$m, insbesondere kleiner oder gleich 20 $\mu$m; und
- größer oder gleich 10 $\mu$m, insbesondere größer oder gleich 12 $\mu$m, insbesondere größer oder gleich 14 $\mu$m.

Die Hohlkernfaser weist einen Kernradius auf, welcher sich aus der kürzesten Distanz zwischen einer Längsachse der antiresonanten Hohlkernfaser und der Antiresonanzeinheit ergibt. Um eine antiresonante Hohlkernfaser mit kleinerem Kernradius herzustellen, bedarf es einer immer stärkeren Erwärmung der Faseranordnung. Die Nutzung des erfindungsgemäßen Verhältnisses der Querschnittsfläche stellt sicher, dass die Deformation der Antiresonanzeinheiten durch den Wärmeeintrag im Rahmen der Herstellung der Hohlkernfaser minimiert wird.

Eine weitere Ausführungsvariante zeichnet sich dadurch aus, dass das Hüllrohr wenigstens eines der folgenden Merkmale aufweist:

- der Hüllrohr-Durchmesser kleiner gleich 100 mm, kleiner gleich 90 mm, kleiner gleich 75 mm, kleiner gleich 50 mm ist;
- der Hüllrohr-Durchmesser größer gleich 10 mm, größer gleich 15 mm, größer gleich 20 mm ist;
- die Hüllrohr-Wandung eine Wandstärke von mehr als 2 mm, mehr als 3 mm, mehr als 5 mm, mehr als 7,5 mm aufweist;
- die Hüllrohr-Wandung eine Wandstärke von weniger als 25 mm, weniger als 20 mm, weniger als 15 mm aufweist;
- das Hüllrohr eine Hüllrohrlänge von mindestens 1 m aufweist;
- dass ein Betrag der Wandstärke der Hüllrohr-Wandung über die Hüllrohrlänge um weniger als 10 %, insbesondere 5 %, insbesondere 3 % der Wandstärke variiert.

Die aufgeführten Größen beeinflussen den Effekt der Temperarturreduktion der Antiresonanzeinheit positiv.

Eine weitere Ausführungsvariante zeichnet sich dadurch aus, dass das Mantelrohr wenigstens eines der folgenden Merkmale aufweist:

- der Mantelrohr-Durchmesser kleiner gleich 290 mm, insbesondere kleiner gleich 220 mm, insbesondere kleiner gleich 180 mm, insbesondere kleiner gleich 150 mm ist;
- der Mantelrohr-Durchmesser größer gleich 50 mm, insbesondere größer gleich 60 mm, insbesondere größer gleich 75 mm, insbesondere größer gleich 85 mm ist;
- die Mantelrohr-Wandung eine Wandstärke von mehr als 15 mm, insbesondere mehr als 20 mm, insbesondere mehr als 30 mm, insbesondere mehr als 40 mm aufweist;
- die Mantelrohr-Wandung eine Wandstärke von weniger als 90 mm, insbesondere weniger als 80 mm, insbesondere weniger als 70 mm, insbesondere weniger als 60 mm aufweist;
- das Mantelrohr eine Mantelrohrlänge von mindestens 1 m aufweist;
- dass ein Betrag der Wandstärke der Mantelrohr-Wandung über die Mantelrohrlänge um nicht mehr als 10 %, insbesondere 5 %, insbesondere 3 % der Wandstärke variiert.

Die aufgeführten Größen beeinflussen den Effekt der Temperarturreduktion der Antiresonanzeinheit positiv.

Eine weitere Ausführungsvariante zeichnet sich dadurch aus, dass die Hüllrohrlänge und die Mantelrohrlänge, insbesondere die Hüllrohrlänge, die Mantelrohrlänge und eine Länge der Antiresonanzeinheiten, sich um nicht mehr als um 15 %, insbesondere 10 %, insbesondere 5 %, bezogen auf die Mantelrohrlänge unterscheiden. Bei dieser Ausführungsvariante stimmen die Hüllrohrlänge und die Mantelrohrlänge im Rahmen der vorgegebenen Differenzen überein. Dies erleichtert insbesondere das Verbinden im Schritt Erstellen der Hohlkern-Anordnung.

Eine weitere Ausführungsvariante zeichnet sich dadurch aus, dass das Verfahren wenigstens eines der folgenden Merkmale aufweist:

- ein Betrag der Hüllrohr-Querschnittsfläche der Hüllrohr-Wandung über die Hüllrohrlänge nicht mehr als um 10 %, insbesondere 5 %, insbesondere 3 % variiert;
- ein Betrag der Mantelrohr-Querschnittsfläche der Mantelrohr-Wandung über die Mantelrohrlänge nicht mehr als um 10 %, insbesondere 5 %, insbesondere 3 % variiert; und
- ein Betrag des Verhältnisses der Mantelrohr-Querschnittsfläche zu der Hüllrohr-Querschnittsfläche über die Mantelrohrlänge nicht mehr als um 10 %, insbesondere 5 %, insbesondere 3 %, bezogen auf die Mantelrohr-Querschnittsfläche variiert.

Produktionsbedingt kommt es zu Variationen in den geometrischen Abmessungen des Mantelrohres und/oder des Hüllrohres. Diese können in einem gegebenen Intervall liegen, um das erfindungsgemäße Verhältnis weiter zu beschreiben.

Eine weitere Ausführungsvariante zeichnet sich dadurch aus, dass das Verfahren zwischen dem Schritt des Einbringens und dem Schritt des Ziehens heißformprozessschrittfrei ist. Dabei bedeutet heißformprozessschrittfrei, dass zwischen den beiden Schritten Einbringen und Ziehen keine die Viskosität der beiden Elemente Hohlkern-Anordnung und Mantelrohr signifikant ändernde Erwärmung, insbesondere auf Temperaturen über 500 °C, erfolgt. Dies hat den Vorteil, dass keine Erwärmung der Antiresonanzelemente erfolgt, die zu einer Deformation der geometrischen Gestaltung führen könnte, was in einer erhöhten Dämpfung der Hohlkernfaser resultieren kann.

Eine weitere Ausführungsvariante zeichnet sich dadurch aus, dass das Verfahren zwischen dem Schritt des Einbringens und dem Schritt des Ziehens zwischenschrittfrei ist. Dabei bedeutet zwischenschrittfrei, dass zwischen den beiden Schritten Einbringen und Ziehen kein weiterer Zwischenschritt erfolgt, der zu einer strukturell signifikanten und/oder chemisch signifikanten Änderung der beiden Elemente Hohlkern-Anordnung und Mantelrohr führt. Nicht von zwischenschrittfrei umfasst sind Verfahrensschritte wie Reinigen, Polieren, und/oder Kontrollieren der Hohlkern-Anordnung und/oder des Mantelrohrs. Die zwischenschrittfreie Ausführungsvariante hat den Vorteil, dass das Verhältnis der Mantelrohr-Querschnittsfläche zu der Hüllrohr-Querschnittsfläche zwischen den beiden Schritten Einbringen und Ziehen erhalten bleibt. Dies erleichtert die korrekte Einstellung des Verhältnisses, um so die reduzierte Temperatur an den Antiresonanzeinheiten sicherzustellen.

Eine weitere Ausführungsvariante zeichnet sich dadurch aus, dass eine im Rahmen des Heißformprozesses im Schritt Ziehen in das Mantelrohr eingebrachte Wärme bei einem Übergang zwischen Mantelrohr und Hüllrohr wenigstens zwei Wärmeübergängen unterliegt, insbesondere, dass nach dem Schritt Einbringen ein Spalt zwischen dem Mantelrohr und der Hohlkern-Anordnung besteht, so dass eine insbesondere im Rahmen des Heißformprozesses in Schritt Ziehen in das Mantelrohr eingebrachte Wärme in dem Spalt wenigstens zwei Wärmeübergängen unterliegt.

Wie oben beschrieben erfolgt im Rahmen des Schrittes Einbringen ein zumindest partielles Einschieben der Hohlkern-Anordnung in die Mantelrohr-Innenbohrung. Um dieses mechanische Einschieben sicherzustellen, muss der maximale Durchmesser der Hohlkern-Anordnung kleiner sein als der minimale Durchmesser der Mantelrohr-Innenbohrung. Folglich bildet sich ein Spalt zwischen dem Mantelrohr und der Hohlkern-Anordnung. Überraschenderweise wurde festgestellt, dass die Ausgestaltung dieses Spalts einen wesentlichen Einfluss auf die maximale Temperatur der Antiresonanzeinheiten im Schritt Ziehen hat.

Unter dem Begriff Wärmetransport (auch Wärmeübertragung) wird der Transport von Energie in Form von Wärme über mindestens eine thermodynamische Systemgrenze hinweg verstanden. Es gibt drei Arten von Wärmetransportmechanismen:

- bei der Wärmeleitung oder Konduktion wird kinetische Energie zwischen benachbarten Atomen oder Molekülen ohne Materialtransport übertragen;
- bei der Wärmeströmung oder Konvektion wird thermische Energie in einem strömenden Medium mitgeführt;
- bei der Wärmestrahlung wird thermische Energie als elektromagnetische Wellen übertragen.

Ein Wechsel in der Art des Wärmetransportmechanismus wird häufig auch als Wärmeübergang bezeichnet, der durch einen Wärmeübergangskoeffizienten beschrieben wird. Eine physikalische Größe der Wärmeübertragung ist der Wärmestrom. Dieser beschreibt die Menge an Wärmeenergie, die in einer Zeitspanne von einem Ort hoher Temperatur zu einem Ort niederer Temperatur übertragen wird.

Eine weitere Ausführungsvariante zeichnet sich dadurch aus, dass ein erster Wärmeübergangskoeffizient an einer äußeren Grenzfläche zwischen dem Spalt und der Mantelinnenseite innerhalb des Intervalls [65; 180] W/(m²*K), insbesondere innerhalb des Intervalls [90; 150] W/(m²*K) für 500-900°C liegt. Diese strukturellen Eigenschaften der Hohlkernfaser führen im Zusammenwirken mit dem Verhältnis der Mantelrohr-Querschnittsfläche zu der Hüllrohr-Querschnittsfläche zu einer weiteren Senkung der Temperatur an der Innenfläche des Hüllrohrs.

Eine weitere Ausführungsvariante zeichnet sich dadurch aus, dass ein zweiter Wärmeübergangskoeffizient an einer inneren Grenzfläche zwischen dem Spalt und der Hüllrohr-Außenseite innerhalb des Intervalls [65; 180] W/(m²*K), insbesondere innerhalb des Intervalls [90; 150] W/(m²*K) für 500-900°C liegt. Auch diese strukturellen Eigenschaften der Hohlkernfaser führen im Zusammenwirken mit dem Verhältnis der Mantelrohr-Querschnittsfläche zu der Hüllrohr-Querschnittsfläche zu einer weiteren Senkung der Temperatur an der Innenfläche des Hüllrohrs.

Eine weitere Ausführungsvariante zeichnet sich dadurch aus, dass bei einer zentrierten Positionierung der Hohlkern-Anordnung in der Mantelrohr-Innenbohrung der Spalt wenigstens eines der folgenden Merkmale aufweist:

- die radiale Größe des Spalts kleiner gleich 4 mm, insbesondere kleiner gleich 3 mm, insbesondere kleiner gleich 2 mm, insbesondere kleiner gleich 1 mm ist;
- die radiale Größe des Spalts größer gleich 0,05 mm, insbesondere größer gleich 0,1 mm, 0,3 mm, insbesondere größer gleich 0,5 mm, insbesondere größer gleich 0,75 mm, insbesondere größer gleich 0,85 mm ist.

Die geometirische Größe des Spaltes kann die Temperatur der Antiresonanzeinheiten im Schritt Ziehen beeinflussen. Überraschenderweise wurde festgestellt, dass der Spalt insbesondere im Rahmen einer der oben aufgeführten Größen besonders effektiv den Transport von Wärme aus dem Mantel in die Antiresonanzeinheiten dämpft.

Eine weitere Ausführungsvariante zeichnet sich dadurch aus, dass das Verfahren wenigstens eines der folgenden Schritte umfasst:

- Beschichten der Hohlkernfaser mit wenigstens einer Schicht, insbesondere einer Schicht, die lichthärtendes Polymer aufweist;

- Aufwickeln der Hohlkernfaser auf eine Spule.

Die aus dem Ofen gezogene Hohlkernfaser ist thermisch verformt, aber es treten Mikrorisse auf der Oberfläche der blanken Hohlkernfaser auf. Sobald diese Mikrorisse der Atmosphäre ausgesetzt werden, können sich diese durch das H2O- in der Atmosphäre vergrößern. Um die Festigkeit der Hohlkernfaser zu erhöhen, wird nach dem Schritt Ziehen eine dünne Schicht, insbesondere Polymerschicht, auf die Hohlkernfaser aufgetragen.

Eine weitere Ausführungsvariante zeichnet sich dadurch aus, dass die Hohlkernfaser wenigstens eines der folgenden Merkmale aufweist:

- Hüllrohr und/oder Antiresonanzeinheiten und/oder ARE-Außenrohr und/oder ARE-Innenrohr und/oder Mantelrohr einen amorphen Festkörper, insbesondere ein Glas, insbesondere Quarzglas, umfasst;
- Hüllrohr und/oder Antiresonanzeinheiten und/oder ARE-Außenrohr und/oder ARE-Innenrohr und/oder Mantelrohr aus einem amorphen Festkörper, insbesondere einem Glas, insbesondere Quarzglas, besteht;
- dass wenigstens zwei von Hüllrohr, Antiresonanzeinheiten, ARE-Außenrohr, ARE-Innenrohr und Mantelrohr materialeinheitlich sind, insbesondere ein Glas mit einem Brechungsindex von mindestens 1,4, insbesondere 1,4 bis 3, insbesondere 1,4 bis 2,8 umfassen oder daraus bestehen.

Die oben genannten Merkmale führen zu einer weiteren Temperaturabsenkung insbesondere im Bereich der Antiresonanzeinheiten im Schritt Ziehen. Diese strukturellen Eigenschaften der Hohlkernfaser führen im Zusammenwirken mit dem Verhältnis der Mantelrohr-Querschnittsfläche zu der Hüllrohr-Querschnittsfläche zu einer weiteren Senkung der Temperatur an der Innenfläche des Hüllrohrs.

Der Begriff Intervall [a; b] beschreibt eine zusammenhängende Teilmenge der Menge der reellen Zahlen R:

$$[a; b] := \{ x \in \mathbb{R} \mid a \leq x \leq b \}$$

Dabei ist der Begriff "innerhalb des Intervalls [a; b]" so zu verstehen, dass beide Endpunkte des Bereichs - also a und b - umfassen sind.

Weiterhin sind Offenbarungen von Bereichen vorzugsweise so zu verstehen, dass sie beide Endpunkte des Bereichs umfassen. Darüber hinaus sollte jede Offenbarung eines Bereichs in diesem Dokument vorzugsweise so verstanden werden, dass auch bevorzugte Unterbereiche offenbart werden, in denen ein Endpunkt ausgeschlossen ist oder beide Endpunkte ausgeschlossen sind. Beispielsweise ist die Angabe eines Bereichs von X1 bis X2 so zu verstehen, dass ein Bereich angegeben wird, der die beiden Endpunkte X1 und X2 einschließt. Die in der Beschreibung offenbarten Eigenschaften und Merkmale können für verschiedene Ausgestaltungsformen der beanspruchten Erfindung sowohl getrennt als auch in beliebiger Kombination miteinander wesentlich sein.

Die Erfindung wird im Folgenden durch Figuren weiter beispielhaft illustriert. Die Erfindung ist nicht auf die Figuren beschränkt.

**Figuren**

Es zeigen

Fig. 1 einen Querschnitt durch eine Antiresonanzeinheit sowie eine Ausschnittsvergrößerung einer Nahtlinie,

Fig. 2 einen Querschnitt durch ein Hüllrohr sowie drei Antiresonanzeinheiten,

Fig. 3 einen Querschnitt durch ein Mantelrohr,

Fig. 4 eine Hohlkern-Anordnung und das Mantelrohr,

Fig. 5 einen Querschnitt durch die Hohlkern-Anordnung und das Mantelrohr aus Figur 4,

Fig. 6 einen Querschnitt durch die Hohlkern-Anordnung und das Mantelrohr, einen Ofen und eine antiresonante Hohlkernfaser,

Fig. 7 einen Querschnitt durch die antiresonante Hohlkernfaser,

Fig. 8    Verfahrensschritte zur Herstellung einer antiresonanten Hohlkernfaser,

Fig. 9    einen weiteren Querschnitt durch ein Hüllrohr und ein Mantelrohr,

Fig. 10    einen weiteren Querschnitt durch ein Hüllrohr und ein Mantelrohr,

Fig. 11    einen weiteren Querschnitt durch einen Ofen, ein Hüllrohr und ein Mantelrohr,

Fig. 12    ein Diagramm einer Temperatur entlang der Hüllrohr-Innenseite, aufgetragen über einem Abstand zu einer Ofenunterseite.

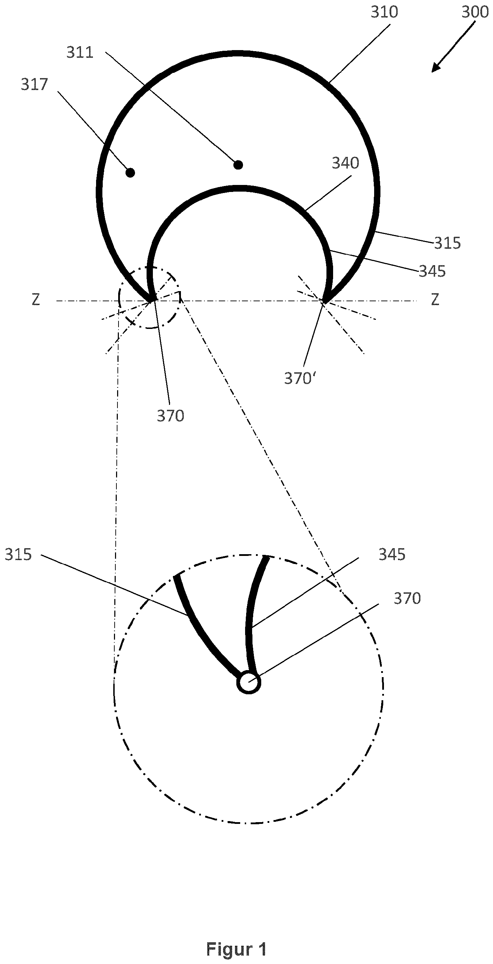

Ein Ausgangspunkt für das Verfahren zur Herstellung einer antiresonanten Hohlkernfaser mit einem Außendurchmesser von weniger als 500 μm ist ein Vorbereiten 3100 einer Anzahl von Antiresonanzeinheiten 300. Die **Figur 1** zeigt eine Antiresonanzeinheit 300. In der dargestellten Variante umfasst die Antiresonanzeinheit 300 ein ARE-Außenrohr 310 und ein darin eingesetztes ARE-Innenrohr 340. Das ARE-Außenrohr 310 ist eine rohrartige Struktur, welches in der dargestellten Ausführungsvariante einen kreisbogenartigen Querschnitt aufweist. Das ARE-Außenrohr 310 ist eine rohrartige Struktur. In Figur 1 erstreckt sich das ARE-Außenrohr 310 und das darin eingesetzte ARE-Innenrohr 340 in die Zeichnungsebene.

Das ARE-Außenrohr 310 weist eine ARE-Außenwandung 315 auf, die ein Material umfasst oder daraus besteht, welches für ein Arbeitslicht der optischen Faser transparent ist, beispielsweise Glas, insbesondere dotiertes oder nicht dotiertes Quarzglas ($SiO2$).

Der in Figur 1 gezeigte Querschnitt verdeutlicht, dass das ARE-Außenrohr 310 einen kreisbogenartigen Querschnitt aufweisen kann. Unter dem Begriff Kreisbogen wird im Rahmen der Erfindung ein Teilstück einer Kreislinie verstanden. Zwei Punkte auf einem Kreis teilen die Kreislinie in zwei Kreisbögen. Der Begriff kreisbogenartig beschreibt, wenn eine äußere Form eines Elements dem Verlauf eines der besagten zwei Kreisbögen folgt.

Weiterhin zeigt die Figur 1 einen Querschnitt durch das ARE-Innenrohr 340. Das ARE-Innenrohr 340 ist eine rohrartige Struktur, die einen kreisbogenartigen Querschnitt aufweist. Das ARE-Innenrohr 340 weist eine Wandung 345 auf, die ein Material umfasst oder daraus besteht, welches für ein Arbeitslicht der optischen Faser transparent ist, beispielsweise Glas, insbesondere dotiertes oder nicht dotiertes Quarzglas ($SiO2$).

Das kreisbogenartig ausgestaltete ARE-Außenrohr 310 und das kreisbogenartig ausgestaltete ARE-Innenrohr 340 sind entlang zweier im Wesentlichen parallel zu einer Längsachse 311 angeordneter Verbindungslinien 370, 370' miteinander verbunden. Dieser Verbund kann insbesondere durch einen Heißformprozess erfolgt sein. Zur Verdeutlichung ist in Figur 1 ein Teil der Antiresonanzeinheit 300 um die Verbindungsline 370 vergrößert dargestellt.

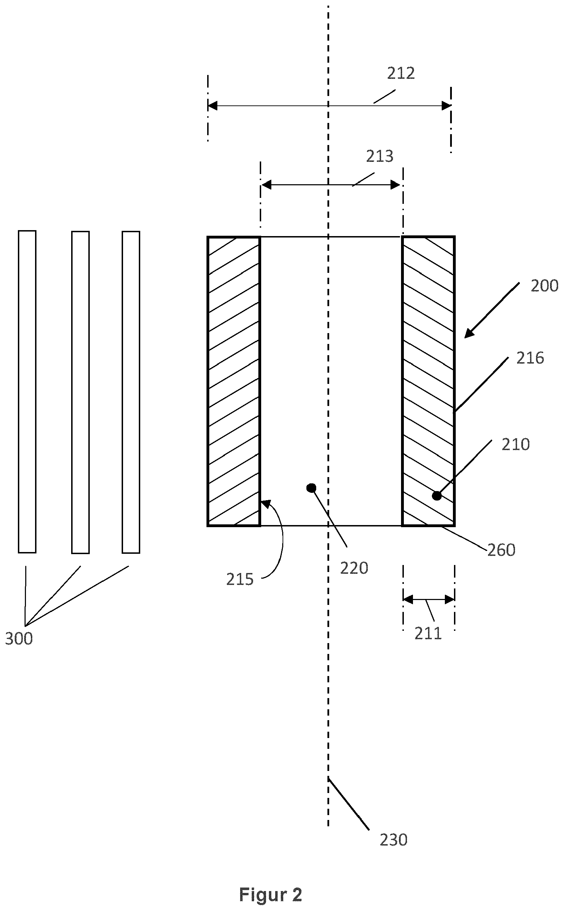

Ein weiterer Schritt des Verfahrens zur Herstellung einer antiresonanten Hohlkernfaser umfasst ein Bereitstellen 3000 eines Hüllrohrs 200. Die **Figur 2** zeigt einen Querschnitt durch ein Hüllrohr 200, welches eine Hüllrohr-Innenbohrung 220 und eine Hüllrohr-Längsachse 230 aufweist, entlang der sich eine von einer Hüllrohr-Innenseite 215 und einer Hüllrohr-Außenseite 216 begrenzte Hüllrohr-Wandung 210 erstreckt. Das Hüllrohr 200 weist einen Hüllrohr-Durchmesser 212 und einen Hüllrohr-Innendurchmesser 213 auf. Die Hüllrohr-Wandung 210 weist eine Wandstärke 211 auf. Das Hüllrohr 200 kann wenigstens eines der folgenden Merkmale aufweisen:

- der Hüllrohr-Durchmesser 212 kleiner gleich 100 mm, kleiner gleich 90 mm, kleiner gleich 75 mm, kleiner gleich 50 mm ist;
- der Hüllrohr-Durchmesser 212 größer gleich 10 mm, größer gleich 15 mm, größer gleich 20 mm ist;
- die Hüllrohr-Wandung 210 eine Wandstärke 211 von mehr als 2 mm, mehr als 3 mm, mehr als 5 mm, mehr als 7,5 mm aufweist;
- die Hüllrohr-Wandung 210 eine Wandstärke 211 von weniger als 25 mm, weniger als 20 mm, weniger als 15 mm aufweist;
- das Hüllrohr 200 eine Hüllrohrlänge von mindestens 1 m aufweist;
- dass ein Betrag der Wandstärke 211 der Hüllrohr-Wandung 210 über die Hüllrohrlänge um weniger als 10 %, insbesondere 5 %, insbesondere 3 % der Wandstärke variiert.

Im Rahmen eines Schrittes Einführen 3200 werden wenigstens Teile der Antiresonanzeinheiten 300 in die Hüllrohr-Innenbohrung 220 eingebracht. Weiterhin können die Antiresonanzeinheiten 300 an Soll-Positionen in der Hüllrohr-Innenbohrung 220 angeordnet werden.

Im Schritte Erstellen 3300 wird aus dem Hüllrohr 200 und den Antiresonanzeinheiten 300 eine Hohlkern-Anordnung 400 erstellt. Dazu erfolgt ein zumindest abschnittsweises Verbinden der Antiresonanzeinheiten 300 mit der Hüllrohr-Innenseite 215. Das Verbinden kann im Rahmen eines Heißformprozesses erfolgen.

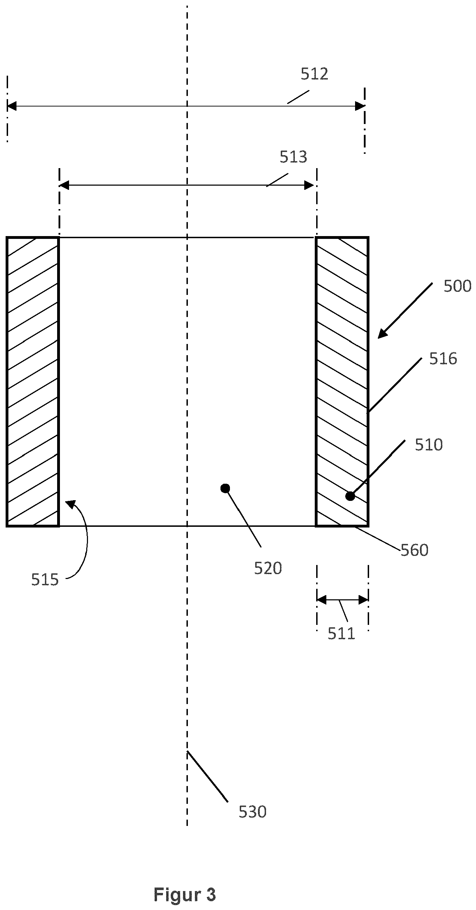

Ein weiterer Schritt des Verfahrens zur Herstellung einer antiresonanten Hohlkernfaser umfasst ein Vorbereiten 3100 eines Mantelrohrs 500. Die **Figur 3** zeigt einen Querschnitt durch ein Mantelrohr 500. Das Mantelrohr 500 weist eine Mantelrohr-Innenbohrung 520 und eine Mantelrohr-Längsachse 530 auf, entlang der sich eine von einer Mantelinnenseite 515 und einer Mantelaußenseite 516 begrenzte Mantelrohr-Wandung 510 erstreckt. Das Mantelrohr 500 weist einen Mantelrohr-Durchmesser 512 und einen Mantelrohr-Innendurchmesser 513 auf. Die Mantelrohr-Wandung 510 weist eine Wandstärke 511 auf. Das Mantelrohr 500 kann wenigstens eines der folgenden Merkmale aufweisen:

- der Mantelrohr-Durchmesser 512 kleiner gleich 290 mm, insbesondere kleiner gleich 220 mm, insbesondere kleiner gleich 180 mm, insbesondere kleiner gleich 150 mm ist;
- der Mantelrohr-Durchmesser 512 größer gleich 50 mm, insbesondere größer gleich 60 mm, insbesondere größer gleich 75 mm, insbesondere größer gleich 85 mm ist;
- die Mantelrohr-Wandung 510 eine Wandstärke 511 von mehr als 20 mm, insbesondere mehr als 30 mm, insbesondere mehr als 40 mm, insbesondere mehr als 50 mm aufweist;
- die Mantelrohr-Wandung 510 eine Wandstärke 511 von weniger als 90 mm, insbesondere weniger als 80 mm, insbesondere weniger als 70 mm, insbesondere weniger als 60 mm aufweist;
- das Mantelrohr eine Mantelrohrlänge von mindestens 1 m aufweist;
- dass ein Betrag der Wandstärke 511 der Mantelrohr-Wandung 510 über die Mantelrohrlänge um nicht mehr als 10 %, insbesondere 5 %, insbesondere 3 % der Wandstärke 511 variiert.

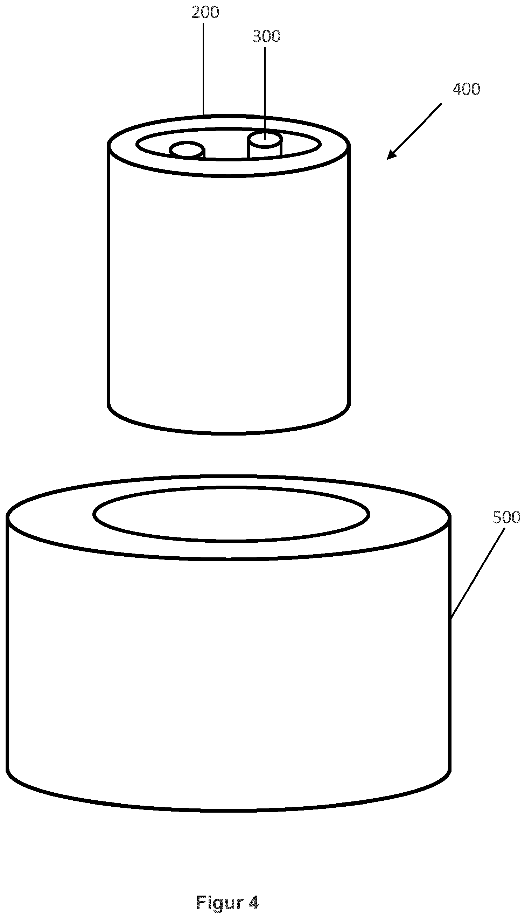

Die **Figur 4** zeigt eine dreidimensionale Darstellung der Hohlkern-Anordnung 400 sowie des Mantelrohrs 500. In dieser Ausführungsvariante weist die Hohlkern-Anordnung 400 zwei Antiresonanzeinheiten 300 auf, welche mit der Hüllrohr-Innenseite 215 des Hüllrohres 200 verbunden sind. Je nach Einsatzzweck der antiresonanten Hohlkernfaser 1000 kann die Hohlkern-Anordnung 400 drei, vier, fünf, sechs, sieben oder acht Antiresonanzeinheiten 300 aufweisen. Das zumindest abschnittsweise Verbinden der Antiresonanzeinheiten 300 mit der Hüllrohr-Innenseite 215 kann wenigstens eines der folgenden Merkmale umfassen:

- ein Verbinden im Rahmen eines zweiten Heißformprozesses, insbesondere ausgewählt aus wenigstens einem von Elongieren und Kollabieren;
- ein stoffschlüssiges Verbinden der Antiresonanzeinheiten 300 mit der Hüllrohr-Innenseite 215 entlang einer Verbindungsnaht;
- ein punktuelles und stoffschlüssiges Verbinden der Antiresonanzeinheiten 300 mit Teilen der Hüllrohr-Innenseite 215 der Hüllrohr-Wandung 210.

Je nach Ausführungsvariante können die Hüllrohrlänge und die Mantelrohrlänge, insbesondere die Hüllrohrlänge, die Mantelrohrlänge und eine Länge der Antiresonanzeinheiten, sich um nicht mehr als um 15 %, insbesondere 10 %, insbesondere 5 %, bezogen auf die Mantelrohrlänge unterscheiden.

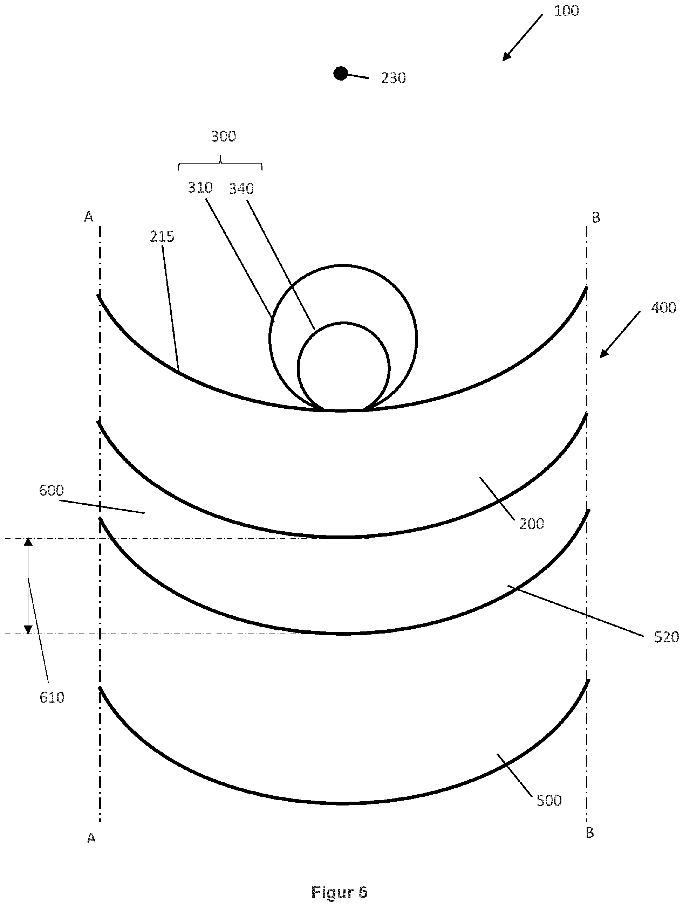

Die **Figur 5** zeigt einen Querschnitt durch eine Faseranordnung 100, aufweisend ein Mantelrohr 500 und eine Hohlkern-Anordnung 400 zwischen zwei Schnittlinien A-A und B-B. Der dargestellte Ausschnitt der Hohlkern-Anordnung 400 weist das Hüllrohr 200 und die Antiresonanzeinheit 300 auf, welche mit der Hüllrohr-Innenseite 215 des Hüllrohres 200 verbunden sind. Die Antiresonanzeinheit 300 weist das ARE-Außenrohr 310 und das ARE-Innenrohr 340 auf. Umfangen ist die Hohlkern-Anordnung 400 von dem Mantelrohr 500.

Um ein Einbringen 3500 der Hohlkern-Anordnung 400 in das Mantelrohr 500 sicherzustellen, muss der maximale Durchmesser der Hohlkern-Anordnung kleiner sein als der minimale Durchmesser der Mantelrohr-Innenbohrung. Folglich bildet sich ein Spalt 600 zwischen dem Mantelrohr 500 und der Hohlkern-Anordnung 400. Dieser Spalt 600 weist eine die radiale Größe 610 auf. Überraschenderweise wurde festgestellt, dass die Ausgestaltung dieses Spalts einen wesentlichen Einfluss auf die maximale Temperatur der Antiresonanzeinheiten im Schritt Ziehen hat.

In einer Ausführungsvariante ist der Spalt 600, welcher zwischen dem Mantelrohr 500 und der Hohlkern-Anordnung besteht, derart, dass eine, insbesondere im Rahmen des Heißformprozesses im Schritt Ziehen in das Mantelrohr 500 eingebrachte Wärme, in dem Spalt 600 wenigstens zwei Wärmeübergängen unterliegt. So kann insbesondere bei einer zentrierten Positionierung der Hohlkern-Anordnung 400 in der Mantelrohr-Innenbohrung 520 der Spalt 600 wenigstens eines der folgenden Merkmale aufweisen:

- die radiale Größe 610 des Spalts 600 kleiner gleich 4 mm, insbesondere kleiner gleich 3 mm, insbesondere kleiner gleich 2 mm, insbesondere kleiner gleich 1 mm ist;
- die radiale Größe 610 des Spalts 600 größer gleich 0,3 mm, insbesondere größer gleich 0,5 mm, insbesondere größer gleich 0,75 mm, insbesondere größer gleich 0,85 mm ist.

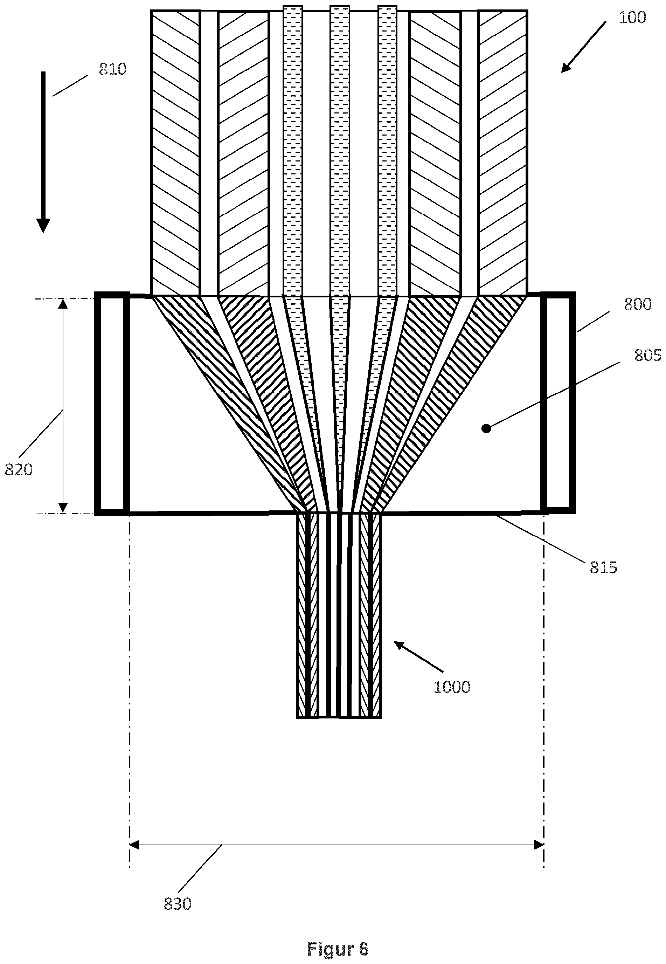

Im Rahmen eines Schrittes Ziehen 3600 erfolgt eine Vergrößerung der longitudinalen Ausdehnung und/oder einer Reduktion der transversalen Ausdehnung der Faseranordnung aus Mantelrohr und Hohlkern-Anordnung. Dies erfolgt im Rahmen eines Heißformprozesses. Unter dem Begriff Heißformprozess wird ein Verfahrensschritt verstanden, bei dem die Temperatur eines Elements durch Wärmeeintrag erhöht wird. Den Schritt Ziehen 3600 verdeutlicht insbesondere die **Figur 6**, welche das Durchlaufen der Faseranordnung 100 durch einen elektrischen Ofen 800 darstellt. Der Ofen 800 ist eine Vorrichtung zur kontrollierten Erzeugung von Wärme für die Übertragung ebendieser Wärme in eine Raumzone 805. Ein Bewegungspfeil 810 verdeutlicht die Richtung, aus der die Faseranordnung 100 mit einer definierten Vorschubgeschwindigkeit in die Raumzone 805 eingefahren wird. Der Ofen 800 weist eine Ofenhöhe 820 und einen Innendurchmesser 830 auf.

Durch das Einwirken der Wärme auf die Faseranordnung 100 erweicht dessen Material, so dass sich durch ein aktives und/oder passives Einwirken eine Vergrößerung der longitudinalen Ausdehnung und/oder eine Reduktion der transversalen Ausdehnung ergibt. Am Ende des Durchlaufens des Ofens entsteht die antiresonante Hohlkernfaser 1000.

Die Auswirkungen, die der Schritt Ziehen 3600 auch die geometrische Größe der Faseranordnung 100 haben kann, verdeutlichen folgende beispielhafte Zahlen. So kann das Mantelrohr 500 einen Mantelrohr-Durchmesser von kleiner gleich 290 mm, insbesondere kleiner gleich 220 mm aufweisen. Nach Durchlaufen des Ofens 800 kann die antiresonante Hohlkernfaser einen Außendurchmesser von weniger als 500 $\mu$m, insbesondere weniger als 300 $\mu$m aufweisen. Die Reduktion der transversalen Ausdehnung, die im Schritt Ziehen 3600 auftreten kann, beträgt somit fast drei Größenordnungen.

Weiterhin kann das Ziehen 3600 maßstäblich erfolgen, so dass sich beispielsweise die Form und Anordnung von Bauteilen oder Bestandteilen im elongierten Endprodukt widerspiegeln. Insbesondere kann das Ziehen 3600 derart maßstäblich erfolgen, dass die Verhältnisse der geometrischen Formen der Antiresonanzeinheiten 300, insbesondere kann der ARE-Außenrohr 310 und ARE-Innenrohre 340, vor und nach dem Ziehen erhalten blieben. In diesem Fall spiegeln sich die geometrische Form, Ausdehnung und Anordnung der Bauteile oder Bestandteile der Faseranordnung 100 im gezogenen Endprodukt wider.

Weiterhin kann das Ziehen 3600 derart erfolgen, dass verschiedene Bereiche in der Faseranordnung unterschiedlichen Geometrieänderungen unterliegen. So kann beispielsweise durch ein Anlegen eines Überdrucks in dem ARE-Außenrohr 310 und/oder ARE-Innenrohr 340 die jeweilige Geometrieveränderungen im Schritt Ziehen 3600 variiert werden. Weiterhin kann durch unterschiedliche Drücke in den jeweiligen Bestandteilen der Faseranordnung 100 während des Ziehens 3600 die Verhältnisse

- Mantelrohr-Durchmesser 512 zu Mantelrohr-Innendurchmesser 513,
- Hüllrohr-Durchmesser 212 zu Hüllrohr-Innendurchmesser 213,
- Außendurchmesser zu Innendurchmesser des ARE-Außenrohrs 310, und/oder
- Außendurchmesser zu Innendurchmesser des ARE-Innenrohrs 340

geändert werden. Weiterhin können durch unterschiedliche Drücke die Größenverhältnisse von Mantelrohr 500, Hüllrohr 200, ARE-Außenrohr 310 und/oder ARE-Innenrohr 340 zueinander geändert werden.

Eine weitere Ausführungsvariante zeichnet sich dadurch aus, dass das Verfahren zwischen dem Schritt des Einbringens 3500 und dem Schritt des Ziehens 3600 heißformprozessschrittfrei ist. Dabei bedeutet heißformprozessschrittfrei, dass zwischen den beiden Schritten Einbringen 3500 und Ziehen 3600 keine die Viskosität der beiden Elemente Hohlkern-Anordnung und Mantelrohr signifikant ändernde Erwärmung, insbesondere auf Temperaturen über 500 °C, erfolgt.

An den Schritt des Ziehens 3600 kann sich insbesondere wenigstens einer der folgenden Schritte anschließen:

- Beschichten der Hohlkernfaser mit wenigstens einer Schicht, insbesondere einer Schicht, die lichthärtendes Polymer aufweist;
- Aufwickeln der Hohlkernfaser auf eine Spule.

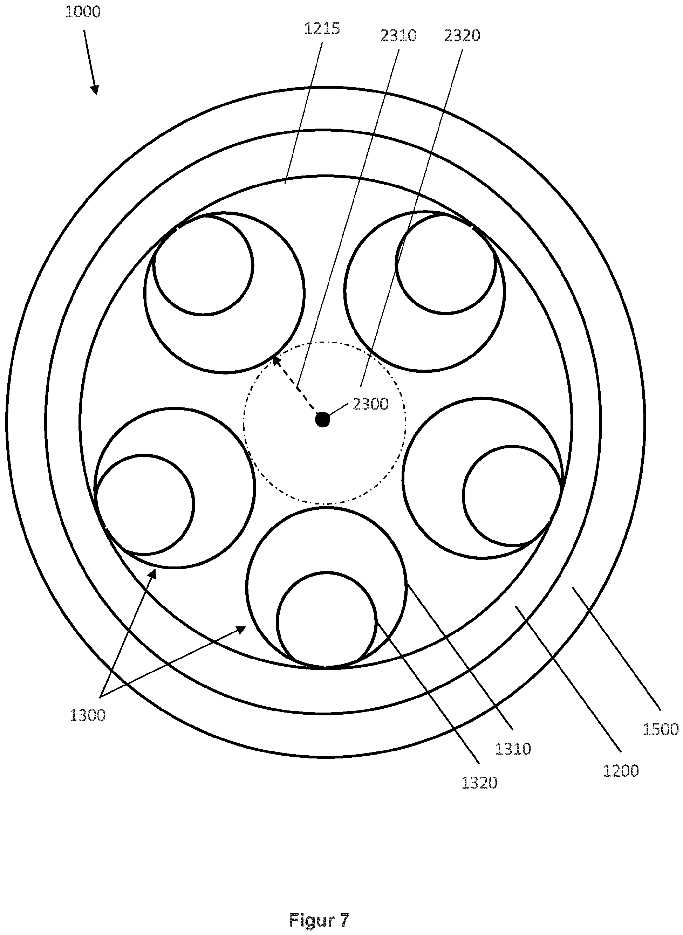

Das Ergebnis des Schrittes Ziehen 3600 verdeutlicht auch die **Figur 7**, welche einen Querschnitt durch eine antiresonante Hohlkernfaser 1000 zeigt, die aus einer Faseranordnung 100 erstellt wurde. Die antiresonante Hohlkernfaser 1000 weist einen hohlen Kern 2320 auf. Durch den hohlen Kern 2320 kann eine elektromagnetische Welle propagieren. Die Hohlkernfaser 1000 weist einen Kernradius 2310 auf, welcher sich aus der kürzesten Distanz zwischen einer Längsachse 2300 der antiresonanten Hohlkernfaser 1000 und einem Faser-ARE-Außenrohr 1310 ergibt. Die Figur 7 verdeutlicht, dass im Schritt Ziehen 3600 ein Übergang erfolgt, bei welchem aus

- einem Hüllrohr 200 ein Faser-Hüllrohr 1200,
- einem Mantelrohr 500 ein Faser-Mantelrohr 1500,
- einer Antiresonanzeinheit 300 eine Faser-Antiresonanzeinheit 1300,
- einem ARE-Außenrohr 310 ein Faser-ARE-Außenrohr 1310, und
- einem ARE-Innenrohr 340 ein Faser-ARE-Innenrohr 1320 wird.

Dabei sind das Faser-Hüllrohr 1200 und das Faser-Mantelrohr 1500 derart stoffschlüssig verbunden, dass eine Unterscheidung zwischen beiden nicht oder nur unter großem Aufwand möglich ist. Die Figur 7 verdeutlicht weiterhin die Anordnung der Mehrzahl an Faser-Antiresonanzeinheiten 1300 auf der den Hohlkern begrenzenden Innenfläche 1215. In einer Ausführungsvariante kann die antiresonante Hohlkernfaser 1000 drei, vier, fünf, sechs, sieben oder acht Faser-Antiresonanzeinheiten 1300 aufweisen.

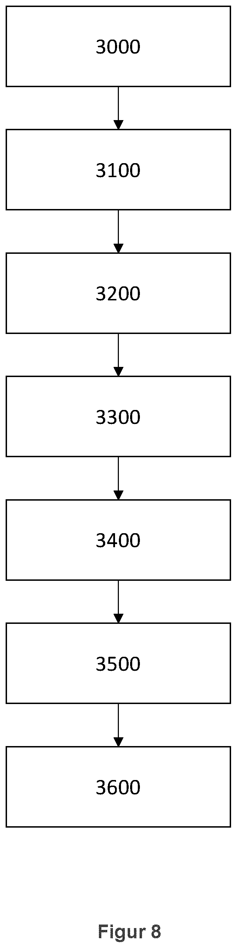

Wie **Figur 8** zeigt, umfasst das Verfahren zur Herstellung einer antiresonanten Hohlkernfaser 1000 mit einen Außendurchmesser von weniger als 500 μm die Schritte:

- Bereitstellen 3000 eines Hüllrohrs 200, das eine Hüllrohr-Innenbohrung 220 und eine Hüllrohr-Längsachse 230 aufweist, entlang der sich eine von einer Hüllrohr-Innenseite 215 und einer Hüllrohr-Außenseite 216 begrenzte Hüllrohr-Wandung 210 erstreckt,
- Vorbereiten 3100 einer Anzahl von Antiresonanzeinheiten 300, jeweils umfassend ein ARE-Außenrohr 310,
- Einführen 3200 von wenigstens Teilen der Antiresonanzeinheiten 300 in die Hüllrohr-Innenbohrung 220,
- Erstellen 3300 einer Hohlkern-Anordnung 400, umfassend das Hüllrohr 200 und die Antiresonanzeinheiten 300, durch ein zumindest abschnittsweises Verbinden der Antiresonanzeinheiten 300 mit der Hüllrohr-Innenseite 215,
- Vorbereiten 3400 eines Mantelrohrs 500, das eine Mantelrohr-Innenbohrung 520 und eine Mantelrohr-Längsachse 530 aufweist, entlang der sich eine von einer Mantelinnenseite 515 und einer Mantelaußenseite 516 begrenzte Mantelrohr-Wandung 510 erstreckt,
- Einbringen 3500 von wenigstens Teilen der Hohlkern-Anordnung 400 in die Mantelrohr-Innenbohrung 520,
- Ziehen 3600 der Hohlkernfaser 1000 aus dem Mantelrohr 500 und der Hohlkern-Anordnung 400 durch einen Heißformprozess,

Dabei ist vorgesehen, dass im Schritt Ziehen 3600 der Hohlkernfaser 1000

- das Hüllrohr 200 einen Hüllrohr-Durchmesser 212 von mindestens 8 mm aufweist,
- das Mantelrohr 500 einen Mantelrohr-Durchmesser 512 von mindestens 25 mm aufweist, und
- ein Verhältnis einer Mantelrohr-Querschnittsfläche 550 der Mantelrohr-Wandung 510 zu einer Hüllrohr-Querschnittsfläche 450 der Hüllrohr-Wandung 410 innerhalb des Intervalls [5; 40] liegt.

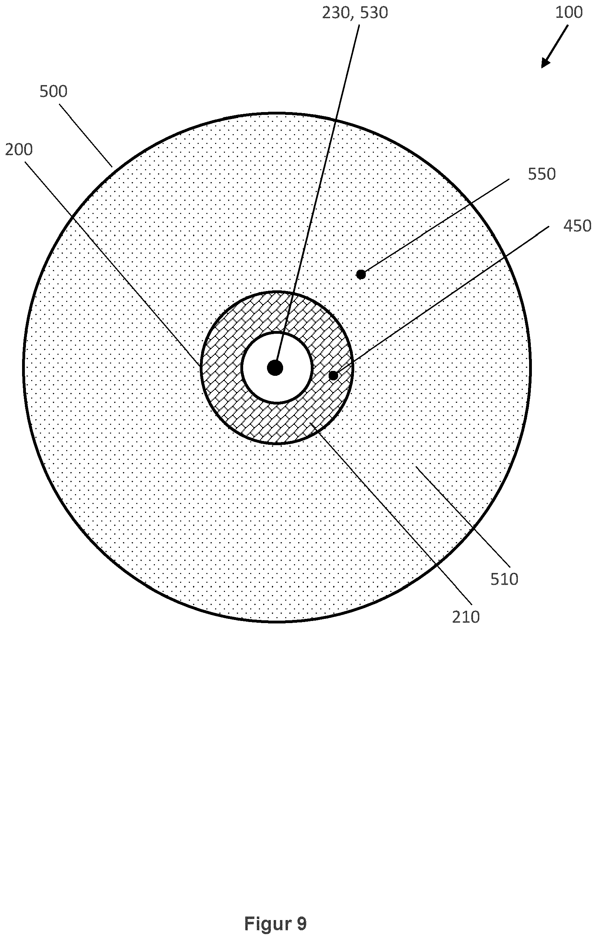

Die **Figur 9** zeigt einen Querschnitt durch eine Faseranordnung 100, aufweisend ein Mantelrohr 500 und eine Hohlkern-Anordnung 400. Das Hüllrohr 200 weist eine Hüllrohr-Wandung 210 auf, die die Hüllrohr-Querschnittsfläche 450 aufweist. Das Mantelrohr 500 weist eine Mantelrohr-Wandung 510 auf, die die Mantelrohr-Querschnittsfläche 550 aufweist.

Die Hüllrohr-Querschnittsfläche 450 bezeichnet jene Fläche, die sich aus dem Schnittpunkt einer auf der Hüllrohr-Längsachse 230 senkrecht verlaufenden Ebene mit dem Hüllrohr 200 ergibt. Die Mantelrohr-Querschnittsfläche 550 bezeichnet jene Fläche, die sich aus dem Schnittpunkt einer auf der Mantelrohr-Längsachse 530 senkrecht verlaufenden Ebene mit dem Mantelrohr 500 ergibt. In Figur 9 sind das Hüllrohr 200 und das Mantelrohr 500 derart zueinander ausgerichtet, dass die Mantelrohr-Längsachse 530 und die Hüllrohr-Längsachse 230 deckungsgleich sind.

Das Verfahren ist dadurch gekennzeichnet, dass das Verhältnis der Mantelrohr-Querschnittsfläche 550 zu einer Hüllrohr-Querschnittsfläche 450 im Intervall [5; 40] liegt. Überraschend hat sich gezeigt, dass nur in dem offenbarten Intervall

- einerseits eine Absenkung der Temperatur an der Mantelinnenseite 515 als auch an den Antiresonanzeinheiten 300 erfolgt, und
- andererseits die Wandstärke 511 der Mantelrohr-Wandung 510 groß genug ist, um den Großteil, insbesondere mehr als 80 % der beim Ziehen 3600 auftretenden Spannung, aufzunehmen.

Eine weitere Ausführungsvariante des Verfahrens zeichnet sich dadurch aus, dass das Verhältnis der Mantelrohr-Querschnittsfläche 550 zu der Hüllrohr-Querschnittsfläche 450 wenigstens eines der folgenden Merkmale aufweist:

- kleiner oder gleich 37; insbesondere kleiner oder gleich 35, insbesondere kleiner oder gleich 30;
- größer oder gleich 9, insbesondere größer oder gleich 12, insbesondere größer oder gleich 15, insbesondere größer oder gleich 20.

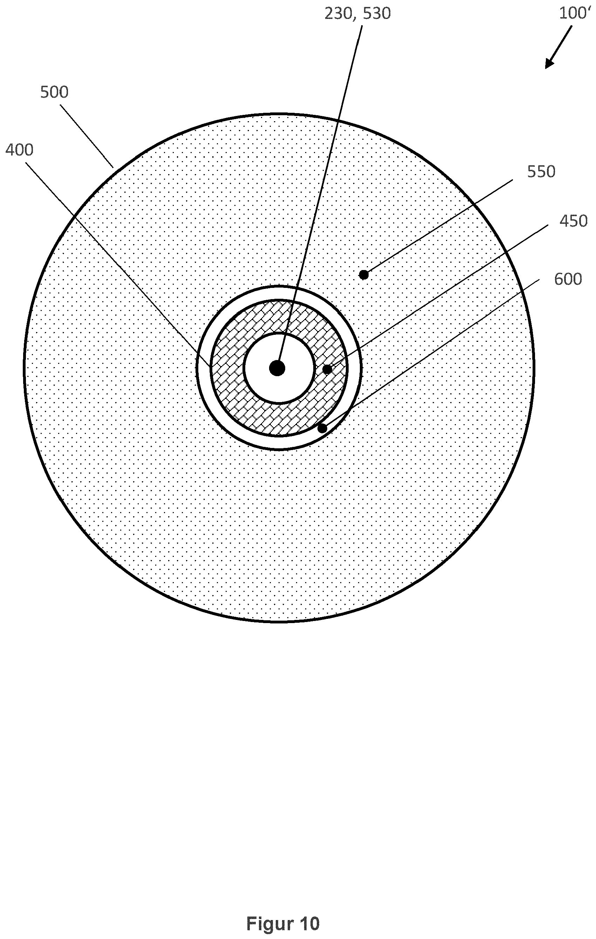

Die **Figur 10** zeigt einen Querschnitt durch eine Ausführungsvariante einer Faseranordnung 100', aufweisend ein Mantelrohr 500 und eine Hohlkern-Anordnung 400. Die Faseranordnung 100' unterscheidet sich von der Faseranordnung 100 lediglich dadurch, dass nach dem Schritt Einbringen 3500 ein Spalt 600 zwischen dem Mantelrohr 500 und dem Hüllrohr 200 besteht. Alle anderen Elemente der Faseranordnung 100' stimmen mit der Faseranordnung 100 überein.

Insbesondere kann der Spalt 600 derart ausgestaltet sein, dass im Rahmen des Heißformprozesses im Schritt Ziehen in das Mantelrohr 500 eingebrachte Wärme, in dem Spalt 600 wenigstens zwei Wärmeübergängen unterliegt.

Dabei kann ein erster Wärmeübergangskoeffizient an einer äußeren Grenzfläche zwischen dem Spalt und der Mantelinnenseite innerhalb des Intervalls [65; 180] W/(m$^2$*K), insbesondere innerhalb des Intervalls [90; 150] W/(m$^2$*K) für 500-900°C liegen. Alternativ oder zusätzlich kann ein zweiter Wärmeübergangskoeffizient an einer inneren Grenzfläche zwischen dem Spalt und der Hüllrohr-Außenseite innerhalb des Intervalls [65; 180] W/(m$^2$*K), insbesondere innerhalb des Intervalls [90; 150] W/(m$^2$*K) für 500-900°C liegen.

So kann bei einer zentrierten Positionierung der Hohlkern-Anordnung 400 in der Mantelrohr-Innenbohrung 520 die Größe 610 des Spalts 600 wenigstens eines der folgenden Merkmale aufweisen:

- der Spalt kleiner gleich 4 mm, insbesondere kleiner gleich 3 mm, insbesondere kleiner gleich 2 mm, insbesondere kleiner gleich 1 mm ist;
- der Spalt größer gleich 0,3 mm, insbesondere größer gleich 0,5 mm, insbesondere größer gleich 0,75 mm, insbesondere größer gleich 0,85 mm ist.

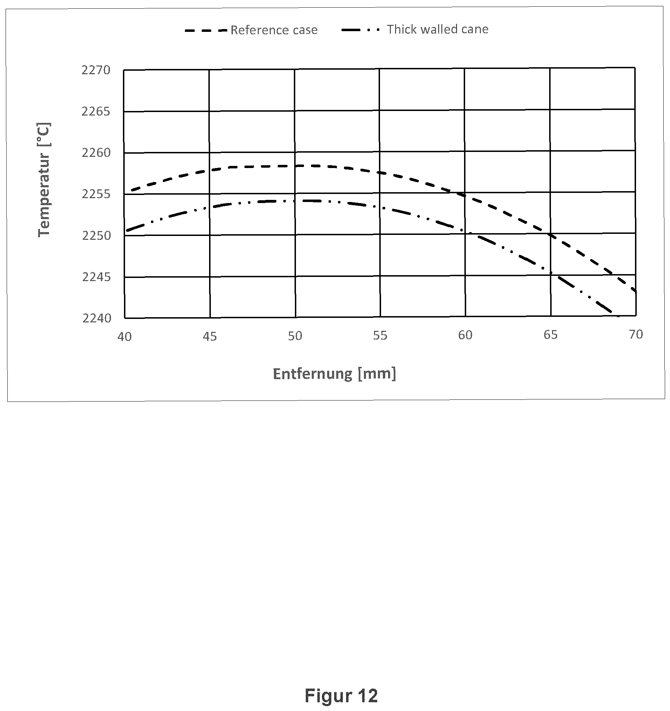

Die **Figur 12** zeigt die Ergebnisse von Simulationen der Temperaturverteilung an Antiresonanzeinheiten 300 einer Faseranordnung 100. Für die numerischen Berechnungen wurde ein P1-Strahlungsmodell für die Strahlungswärmeübertragung in einem halbtransparenten Medium und die Ray-Shooting-Methode für die Strahlung auf einer halbtransparenten Oberfläche genutzt.

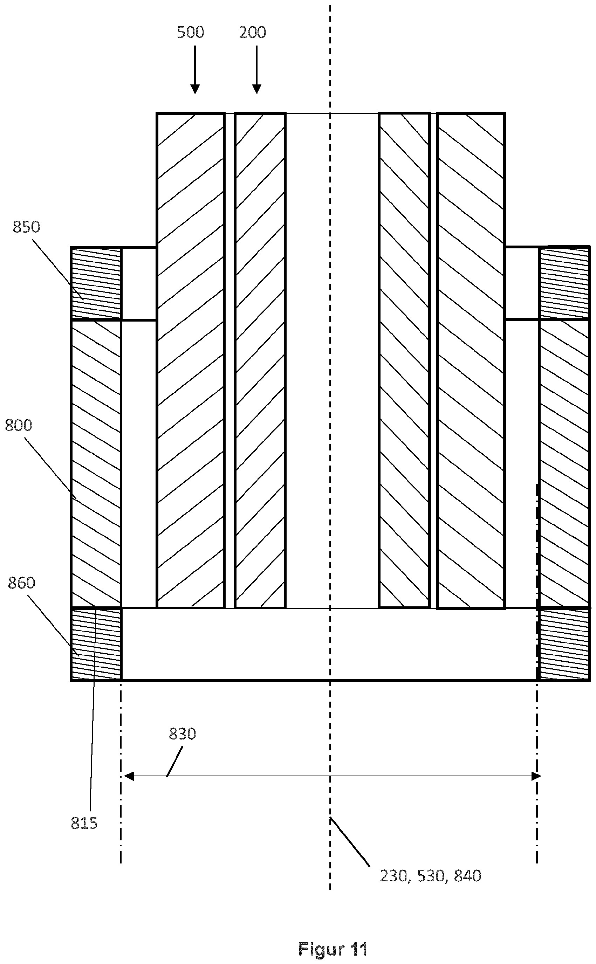

Die Ausgangsbasis für die Simulationen waren die Faseranordnung 100, aufweisend ein Mantelrohr 500 und eine Hohlkern-Anordnung 400. Die **Figur 11** verdeutlicht die Anordnung der Elemente Ofen 800, Mantelrohr 500 und Hüllrohr 200. In der Simulation wiesen die Faseranordnungen 100 eine Mantelrohrlänge von 210 mm und eine ebenso lange Hüllrohrlänge auf.

Dabei sind das Hüllrohr 200, das Mantelrohr 500 und der Ofen 800 derart zueinander ausgerichtet, dass die Mantelrohr-Längsachse 530, die Hüllrohr-Längsachse 230 und eine Ofen-Längsachse 840 deckungsgleich sind. Der Ofen 800 weist eine Ofenhöhe 820 von 120 mm und einen Innendurchmesser 830 von 35 mm auf. Der Ofen ist an seinen Enden mit einem oberen Kontaktbereich 850 und einem unteren Kontaktbereich 860 verbunden. Diese sind passiv ausgestaltet und erzeugen keine Wärme.

Im Rahmen der Simulationen wurde die Faseranordnung 100 jeweils so positioniert, dass das untere Ende des Hüllrohrs 400 und des Mantelrohrs 500 mit dem unteren Ende 815 des Ofens 800 abschließen, was auch Figur 11 verdeutlicht. Die Faseranordnung 100 wurde im Rahmen des Schrittes Ziehen 3600 mit einer Vorschubgeschwindigkeit von 8 mm/min in den elektrischen Ofen 800 eingefahren. Die Ausgangstemperatur der Faseranordnung 100 war 20 °C.

Es wurde ein Gauß-ähnliches Temperaturprofil entlang der Ofenhöhe 820 angenommen, so dass in der Mitte des Ofens 800 die maximale Temperatur vorlag. Berechnet wurde jeweils die Temperaturverteilung entlang der Hüllrohr-Innenseite 215.

|  | Vergleichsmessung (mm) | Faseranordnung 100 (mm) |
|---|---|---|
| Verhältnis der Mantelrohr-Querschnittsfläche 550 zu der Hüllrohr-Querschnittsfläche 450 | 65.5 | 13.2 |
| Mantelrohr-Durchmesser 512 | 28 | 28 |
| Mantelrohr-Innendurchmesser 513 | 7 | 9.6 |
| Wandstärke 511 der Mantelrohr-Wandung 510 | 10.5 | 9.2 |
| Größe 610 des Spalt 600 | 0.25 | 0.25 |
| Hüllrohr-Durchmesser 212 | 6.5 | 9.13 |
| Hüllrohr-Innendurchmesser 213 | 5.57 | 5.57 |
| Wandstärke 211 der Hüllrohr-Wandung 210 | 0.47 | 1.78 |

In **Figur 12** ist die Temperatur entlang der Hüllrohr-Innenseite 215 aufgetragen über einem Anstand zu einer Ofenunterseite 815. Eingezeichnet sind die

- punktartig gekennzeichneten Ergebnisse für eine Faseranordnung, bei der das Verhältnis der Mantelrohr-Querschnittsfläche 550 zu der Hüllrohr-Querschnittsfläche 450 außerhalb des Intervalls [5; 40] liegt, und die
- strichpunktartig gekennzeichneten Ergebnisse für die Faseranordnung 100, bei der das Verhältnis der Mantelrohr-Querschnittsfläche 550 zu der Hüllrohr-Querschnittsfläche 450 innerhalb des Intervalls [5; 40] liegt.

Erkennbar wird eine Reduktion der Temperatur an der Hüllrohr-Innenseite 215 erzielt, wenn das Verhältnis der Mantelrohr-Querschnittsfläche 550 zu der Hüllrohr-Querschnittsfläche 450 innerhalb des Intervalls [5; 40] liegt.

Wie Figur 11 verdeutlicht, liegt die berechnete Temperatur der Faseranordnung 100, deren Verhältnis der Mantelrohr-Querschnittsfläche 550 zu der Hüllrohr-Querschnittsfläche 450 innerhalb des Intervalls [5; 40] liegt, um ca. 5°C unterhalb jener Temperatur, die an der Hüllrohr-Innenseite 215 erzielt wird, wenn das Verhältnis der Mantelrohr-Querschnittsfläche 550 zu der Hüllrohr-Querschnittsfläche 450 außerhalb des Intervalls [5; 40] liegt.

Dieser vermeintlich kleine Temperaturunterschied hat in der tatsächlichen Produktion von antiresonanten Hohlkernfasern eine große Auswirkung. Kleine Änderungen in der Viskosität der Antiresonanzeinheit, insbesondere der ARE-Innenrohre, resultieren häufig in Schwankungen der geometrischen Form. Diese Schwankungen, welche beim Ziehen auftreten können, führen zu Abweichungen der Geometrie der antiresonanten Hohlkernfaser vom angestrebten Faserprofil. Schon kleine Abweichungen vom gewünschten Faserprofil führen allerdings häufig zu einer nichtlinearen Steigung der Dämpfung. Somit haben auch kleinste Abweichungen vom gewünschten Faserprofil starke Auswirkungen. Deshalb erhöht die offenbarte Art der Reduktion der Temperatur an der Hüllrohr-Innenseite 215 die Dämpfung der gezogenen antiresonanten Hohlkernfaser signifikant.

Bezugszeichen

| | |
|---|---|
| 100, 100' | Faseranordnung einer antiresonanten Hohlkernfaser |
| 200 | Hüllrohr |
| 210 | Hüllrohr-Wandung |
| 211 | Wandstärke des Hüllrohrs 200 |
| 212 | Hüllrohr-Durchmesser |
| 213 | Hüllrohr-Innendurchmesser |
| 215 | Hüllrohr-Innenseite |
| 216 | Hüllrohr-Außenseite |
| 220 | Hüllrohr-Innenbohrung |
| 230 | Hüllrohr-Längsachse |
| | |
| 300 | Antiresonanzeinheit (ARE) |
| 310 | ARE-Außenrohr |
| 311 | Längsachse |
| 315 | ARE-Außeneinheitswandung |
| 317 | Innenraum der ARE-Außeneinheit |
| 340 | ARE-Innenrohr |
| 345 | ARE-Inneneinheitswandung |
| 370,370' | Verbindungsnaht |
| | |
| 400 | Hohlkern-Anordnung |
| 450 | Hüllrohr-Querschnittsfläche |
| | |
| 500 | Mantelrohr |
| 510 | Mantelrohr-Wandung |
| 511 | Wandstärke des Mantelrohrs 500 |
| 512 | Mantelrohr-Durchmesser |
| 513 | Mantelrohr-Innendurchmesser |
| 515 | Mantelinnenseite |
| 516 | Mantelaußenseite |
| 520 | Mantelrohr-Innenbohrung |
| 530 | Mantelrohr-Längsachse |
| 550 | Mantelrohr-Querschnittsfläche |
| 600 | Spalt |
| 610 | radiale Größe des Spalts |
| | |
| 800 | Ofen |

805 Raumzone
810 Bewegungspfeil
815 unteres Ende des Ofens 800
820 Ofenhöhe
830 Innendurchmesser des Ofens
840 Ofen-Längsachse
850 Oberer Kontaktbereich
860 Unterer Kontaktbereich

1000 antiresonante Hohlkernfaser
1200 Faser-Hüllrohr
1215 Innenfläche
1300 Faser-Antiresonanzeinheit
1310 Faser-ARE-Außenrohr
1340 ARE-Innenrohr in der Faser
1500 Faser-Mantelrohr

2310 Kernradius
2300 Längsachse
2320 hohler Kern

3000 Bereitstellen eines Hüllrohres
3100 Vorbereiten einer Anzahl von Antiresonanzeinheiten
3200 Einführen
3300 Erstellen einer Hohlkern-Anordnung
3400 Vorbereiten eines Mantelrohrs
3500 Einbringen
3600 Ziehen der Hohlkernfaser

**Patentansprüche**

1. Verfahren zur Herstellung einer antiresonanten Hohlkernfaser (1000) mit einem Außendurchmesser von weniger als 500 $\mu$m, mit den Schritten:

   • Bereitstellen (3000) eines Hüllrohrs (200), das eine Hüllrohr-Innenbohrung (220) und eine Hüllrohr-Längsachse (230) aufweist, entlang der sich eine von einer Hüllrohr-Innenseite (215) und einer Hüllrohr-Außenseite (216) begrenzte Hüllrohr-Wandung (210) erstreckt,
   • Vorbereiten (3100) einer Anzahl von Antiresonanzeinheiten (300), jeweils umfassend ein ARE-Außenrohr (310),
   • Einführen (3200) von wenigstens Teilen der Antiresonanzeinheiten (300) in die Hüllrohr-Innenbohrung,
   • Erstellen (3300) einer Hohlkern-Anordnung (400), umfassend das Hüllrohr (200) und die Antiresonanzeinheiten (300), durch ein zumindest abschnittsweises Verbinden der Antiresonanzeinheiten (300) mit der Hüllrohr-Innenseite (215),
   • Vorbereiten (3400) eines Mantelrohrs (500), das eine Mantelrohr-Innenbohrung (520) und eine Mantelrohr-Längsachse (530) aufweist, entlang der sich eine von einer Mantelinnenseite (515) und einer Mantelaußenseite (516) begrenzte Mantelrohr-Wandung (510) erstreckt,
   • Einbringen (3500) von wenigstens Teilen der Hohlkern-Anordnung (400) in die Mantelrohr-Innenbohrung (520),
   • Ziehen (3600) der Hohlkernfaser aus dem Mantelrohr (500) und der Hohlkern-Anordnung (400) durch einen Heißformprozess,

   **dadurch gekennzeichnet, dass**
   im Schritt Ziehen (3600) der Hohlkernfaser (1000)

   • das Hüllrohr (200) einen Hüllrohr-Durchmesser (212) von mindestens 8 mm aufweist,
   • das Mantelrohr (500) einen Mantelrohr-Durchmesser (512) von mindestens 25 mm aufweist, und
   • ein Verhältnis einer Mantelrohr-Querschnittsfläche (550) der Mantelrohr-Wandung (510) zu einer Hüllrohr-Querschnittsfläche (450) der Hüllrohr-Wandung (210) innerhalb des Intervalls [5; 40] liegt.

2. Verfahren zur Herstellung einer antiresonanten Hohlkernfaser (1000) nach Anspruch 1, **dadurch gekennzeichnet, dass** das Verhältnis der Mantelrohr-Querschnittsfläche (550) zu der Hüllrohr-Querschnittsfläche (450) wenigstens eines der folgenden Merkmale aufweist:

   • kleiner oder gleich 37; insbesondere kleiner oder gleich 35, insbesondere kleiner oder gleich 30;
   • größer oder gleich 9, insbesondere größer oder gleich 12, insbesondere größer oder gleich 15, insbesondere größer oder gleich 20.

3. Verfahren zur Herstellung einer antiresonanten Hohlkernfaser (1000) nach einem der vorherigen Ansprüche, **dadurch gekennzeichnet, dass** das Hüllrohr (200) wenigstens eines der folgenden Merkmale aufweist:

   • der Hüllrohr-Durchmesser (212) kleiner gleich 100 mm, kleiner gleich 90 mm, kleiner gleich 75 mm, kleiner gleich 50 mm ist;
   • der Hüllrohr-Durchmesser (212) größer gleich 10 mm, größer gleich 15 mm, größer gleich 20 mm ist;
   • die Hüllrohr-Wandung (210) eine Wandstärke (211) von mehr als 2 mm, mehr als 3 mm, mehr als 5 mm, mehr als 7,5 mm aufweist;
   • die Hüllrohr-Wandung (210) eine Wandstärke (211) von weniger als 25 mm, weniger als 20 mm, weniger als 15 mm aufweist;
   • das Hüllrohr (200) eine Hüllrohrlänge von mindestens 1 m aufweist;
   • dass ein Betrag der Wandstärke (211) der Hüllrohr-Wandung (210) über die Hüllrohrlänge um weniger als 10 %, insbesondere 5 %, insbesondere 3 % der Wandstärke (211) variiert.

4. Verfahren zur Herstellung einer antiresonanten Hohlkernfaser (1000) nach einem der vorherigen Ansprüche, **dadurch gekennzeichnet, dass** das zumindest abschnittsweise Verbinden der Antiresonanzeinheiten (300) mit der Hüllrohr-Innenseite (215) wenigstens eines der folgenden Merkmale umfasst:

   • ein Verbinden im Rahmen eines zweiten Heißformprozesses, insbesondere ausgewählt aus wenigstens einem von Elongieren und Kollabieren;
   • ein stoffschlüssiges Verbinden der Antiresonanzeinheiten (300) mit der Hüllrohr-Innenseite (215) entlang einer Verbindungsnaht;
   • ein punktuelles und stoffschlüssiges Verbinden der Antiresonanzeinheiten (300) mit Teilen der Hüllrohr-Innenseite (215).

5. Verfahren zur Herstellung einer antiresonanten Hohlkernfaser (1000) nach einem der vorherigen Ansprüche, **dadurch gekennzeichnet, dass** das Mantelrohr (500) wenigstens eines der folgenden Merkmale aufweist:

   • der Mantelrohr-Durchmesser (512) kleiner gleich 290 mm, insbesondere kleiner gleich 220 mm, insbesondere kleiner gleich 180 mm, insbesondere kleiner gleich 150 mm ist;
   • der Mantelrohr-Durchmesser (512) größer gleich 50 mm, insbesondere größer gleich 60 mm, insbesondere größer gleich 75 mm, insbesondere größer gleich 85 mm ist;
   • die Mantelrohr-Wandung (510) eine Wandstärke (511) von mehr als 15 mm, insbesondere mehr als 20 mm, insbesondere mehr als 30 mm, insbesondere mehr als 40 mm aufweist;
   • die Mantelrohr-Wandung (510) eine Wandstärke (511) von weniger als 90 mm, insbesondere weniger als 80 mm, insbesondere weniger als 70 mm, insbesondere weniger als 60 mm aufweist;
   • das Mantelrohr (500) eine Mantelrohrlänge von mindestens 1 m aufweist;
   • dass ein Betrag der Wandstärke (511) der Mantelrohr-Wandung (510) über die Mantelrohrlänge um nicht mehr als 10 %, insbesondere 5 %, insbesondere 3 % der Wandstärke (511) variiert.

6. Verfahren zur Herstellung einer antiresonanten Hohlkernfaser (1000) nach einem der vorherigen Ansprüche, **dadurch gekennzeichnet, dass** die Hüllrohrlänge und die Mantelrohrlänge, insbesondere die Hüllrohrlänge, die Mantelrohrlänge und eine Länge der Antiresonanzeinheiten (300), sich um nicht mehr als um 15 %, insbesondere 10 %, insbesondere 5 %, bezogen auf die Mantelrohrlänge unterscheiden.

7. Verfahren zur Herstellung einer antiresonanten Hohlkernfaser (1000) nach einem der vorherigen Ansprüche, **dadurch gekennzeichnet, dass** das Verfahren wenigstens eines der folgenden Merkmale aufweist:

   • ein Betrag der Hüllrohr-Querschnittsfläche (450) der Hüllrohr-Wandung (210) über die Hüllrohrlänge nicht mehr als um 10 %, insbesondere 5 %, insbesondere 3 % variiert;

• ein Betrag der Mantelrohr-Querschnittsfläche (550) der Mantelrohr-Wandung (510) über die Mantelrohrlänge nicht mehr als um 10 %, insbesondere 5 %, insbesondere 3 % variiert; und
• ein Betrag des Verhältnisses der Mantelrohr-Querschnittsfläche (550) zu der Hüllrohr-Querschnittsfläche (450) über die Mantelrohrlänge nicht mehr als um 10 %, insbesondere 5 %, insbesondere 3 %, bezogen auf die Mantelrohr-Querschnittsfläche (550) variiert.

8. Verfahren zur Herstellung einer antiresonanten Hohlkernfaser (1000) nach einem der vorherigen Ansprüche, **dadurch gekennzeichnet, dass** das Verfahren zwischen dem Schritt des Einbringens (3500) und dem Schritt des Ziehens (3600) heißformprozessschrittfrei ist.

9. Verfahren zur Herstellung einer antiresonanten Hohlkernfaser (1000) nach einem der vorherigen Ansprüche, **dadurch gekennzeichnet, dass** das Verfahren zwischen dem Schritt des Einbringens (3500) und dem Schritt des Ziehens (3600) zwischenschrittfrei ist.

10. Verfahren zur Herstellung einer antiresonanten Hohlkernfaser (1000) nach einem der vorherigen Ansprüche, **dadurch gekennzeichnet, dass** der Schritt des Ziehens (3600) durch einen Heißformprozess, ausgewählt aus wenigstens einem von Elongieren und Kollabieren, erfolgt.

11. Verfahren zur Herstellung einer antiresonanten Hohlkernfaser (1000) nach einem der vorherigen Ansprüche, **dadurch gekennzeichnet, dass** eine im Rahmen des Heißformprozesses im Schritt Ziehen (3600) in das Mantelrohr (500) eingebrachte Wärme bei einem Übergang zwischen Mantelrohr (500) und Hüllrohr (200) wenigstens zwei Wärmeübergängen unterliegt, insbesondere, dass nach dem Schritt Einbringen (3500) ein Spalt (600) zwischen dem Mantelrohr (500) und der Hohlkern-Anordnung (400) besteht, so dass eine insbesondere im Rahmen des Heißformprozesses im Schritt Ziehen (3600) in das Mantelrohr (500) eingebrachte Wärme in dem Spalt (600) wenigstens zwei Wärmeübergängen unterliegt.

12. Verfahren zur Herstellung einer antiresonanten Hohlkernfaser (1000) nach Anspruch 11, **dadurch gekennzeichnet, dass** bei einer zentrierten Positionierung der Hohlkern-Anordnung (400) in der Mantelrohr-Innenbohrung (520) der Spalt (600) wenigstens eines der folgenden Merkmale aufweist:

• eine radiale Größe (610) des Spalts (600) kleiner gleich 4 mm, insbesondere kleiner gleich 3 mm, insbesondere kleiner gleich 2 mm, insbesondere kleiner gleich 1 mm ist;
• die radiale Größe (610) des Spalts (600) größer gleich 0,3 mm, insbesondere größer gleich 0,5 mm, insbesondere größer gleich 0,75 mm, insbesondere größer gleich 0,85 mm ist.

13. Verfahren zur Herstellung einer antiresonanten Hohlkernfaser (1000) nach einem der vorherigen Ansprüche 11 oder 12, **dadurch gekennzeichnet, dass** ein erster Wärmeübergangskoeffizient an einer äußeren Grenzfläche zwischen dem Spalt (600) und der Mantelinnenseite (515) [65; 180] W/(m$^2$*K), insbesondere [90; 150] W/(m$^2$*K) für 500-900°C beträgt.

14. Verfahren zur Herstellung einer antiresonanten Hohlkernfaser (1000) nach einem der vorherigen Ansprüche 11 bis 13, **dadurch gekennzeichnet, dass** ein zweiter Wärmeübergangskoeffizient an einer inneren Grenzfläche zwischen dem Spalt (600) und der Hüllrohr-Außenseite (216) [65; 180] W/(m$^2$*K), insbesondere [90; 150] W/(m$^2$*K) für 500-900°C beträgt.

15. Verfahren zur Herstellung einer antiresonanten Hohlkernfaser (1000) nach einem der vorherigen Ansprüche, **dadurch gekennzeichnet, dass** das Verfahren wenigstens eines der folgenden Schritte umfasst:

• Beschichten der Hohlkernfaser mit wenigstens einer Schicht, insbesondere einer Schicht, die lichthärtendes Polymer aufweist;
• Aufwickeln der Hohlkernfaser auf eine Spule.

**Figur 1**

**Figur 2**

**Figur 3**

Figur 4

Figur 5

Figur 6

Figur 7

```
┌─────────────────────┐
│                     │
│        3000         │
│                     │
└─────────────────────┘
           │
           ▼
┌─────────────────────┐
│                     │
│        3100         │
│                     │
└─────────────────────┘
           │
           ▼
┌─────────────────────┐
│                     │
│        3200         │
│                     │
└─────────────────────┘
           │
           ▼
┌─────────────────────┐
│                     │
│        3300         │
│                     │
└─────────────────────┘
           │
           ▼
┌─────────────────────┐
│                     │
│        3400         │
│                     │
└─────────────────────┘
           │
           ▼
┌─────────────────────┐
│                     │
│        3500         │
│                     │
└─────────────────────┘
           │
           ▼
┌─────────────────────┐
│                     │
│        3600         │
│                     │
└─────────────────────┘
```

Figur 8

Figur 9

Figur 10

Figur 11

**Figur 12**

Europäisches
Patentamt

European
Patent Office

Office européen
des brevets

## EUROPÄISCHER RECHERCHENBERICHT

Nummer der Anmeldung

EP 24 19 4439

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GREGORY T. JASION ET AL: "Fabrication of tubular anti-resonant hollow core fibers: modelling, draw dynamics and process optimization", OPTICS EXPRESS, Bd. 27, Nr. 15, 10. Juli 2019 (2019-07-10) , Seite 20567, XP055655469, DOI: 10.1364/OE.27.020567 * 3. The model; 6. Increasing the yield; Abbildung 2; Tabellen 1-3 * | 1-15 | INV. C03B37/012 C03B37/027 |
| | ----- | | |
| A | EP 3 766 850 A1 (HERAEUS QUARZGLAS [DE]) 20. Januar 2021 (2021-01-20) * Absätze [0027], [0057] - [0062]; Ansprüche * | 1-15 | |
| | ----- | | |
| A | US 2020/319400 A1 (UEBEL PATRICK SEBASTIAN [DE] ET AL) 8. Oktober 2020 (2020-10-08) * Absatz [0207]; Ansprüche; Abbildungen 13,14 * | 1-15 | |
| | ----- | | |

| | RECHERCHIERTE SACHGEBIETE (IPC) |
|---|---|
| | C03B |

Der vorliegende Recherchenbericht wurde für alle Patentansprüche erstellt

| Recherchenort | Abschlußdatum der Recherche | Prüfer |
|---|---|---|
| Den Haag | 10. Januar 2025 | Creux, Sophie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................

& : Mitglied der gleichen Patentfamilie, übereinstimmendes Dokument

EPO FORM 1503 03.82 (P04C03)

# EP 4 696 665 A1

## ANHANG ZUM EUROPÄISCHEN RECHERCHENBERICHT
## ÜBER DIE EUROPÄISCHE PATENTANMELDUNG NR.

EP 24 19 4439

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2025

| Im Recherchenbericht angeführtes Patentdokument | Datum der Veröffentlichung | Mitglied(er) der Patentfamilie | | Datum der Veröffentlichung |
|---|---|---|---|---|
| EP 3766850 A1 | 20-01-2021 | CN | 114127022 A | 01-03-2022 |
| | | EP | 3766850 A1 | 20-01-2021 |
| | | JP | 7546650 B2 | 06-09-2024 |
| | | JP | 2022541488 A | 26-09-2022 |
| | | US | 2022267193 A1 | 25-08-2022 |
| | | WO | 2021009231 A1 | 21-01-2021 |
| US 2020319400 A1 | 08-10-2020 | CN | 113678037 A | 19-11-2021 |
| | | EP | 3948373 A1 | 09-02-2022 |
| | | IL | 286719 A | 31-10-2021 |
| | | TW | 202105067 A | 01-02-2021 |
| | | US | 2020319400 A1 | 08-10-2020 |
| | | WO | 2020200637 A1 | 08-10-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022157179 A1

- WO 2018169487 A1

**In der Beschreibung aufgeführte Nicht-Patentliteratur**

- **VON BENOIT DEBORD**. Hollow-Core Fiber Technology: The Rising of Gas Photonics. *Fibers*, 2019, vol. 7, 16